# EUROPEAN PATENT APPLICATION

(11) **EP 4 818 997 A1**
(43) Date of publication of application: **07.10.2026**
(21) Application number: 25167377.8
(22) Date of filing: 31.03.2025
(51) Int. Cl.: G06Q 10/087, G06N 5/022

(54) **METHODS AND SYSTEMS FOR ASSET LIFECYCLE MANAGEMENT FOR RECURRING USAGE OF ASSETS ENABLING CIRCULAR ECONOMY**

(71) Applicant: Siemens Aktiengesellschaft, 80333 München (DE)
(72) Inventor: KAMATH, Yogesh, 560076 Bangalore, Karnataka (IN); GANESH, Gautam, 560030 Bangalore, Karnataka (IN); KUMAR, Naveen, 560100 Bangalore, Karnataka (IN)
(74) Representative: HKW Intellectual Property PartG mbB

(57) **Abstract**

The present invention generally relates to the field of data processing systems, and more particularly relates to methods and systems for asset lifecycle management for recurring usage of assets enabling a circular economy. The method comprises obtaining input dataset associated with assets in technical installation (120) from data sources and determining multidimensional contextual parameters associated with assets (104). The method comprises generating a semantic graph of the input dataset. Additionally, method comprises determining a context of obtained input dataset by identifying latent relationships between determined multidimensional contextual parameters in generated graphical representation. Further, method comprises extracting entities from the generated graphical representation and generating LLM prompt corresponding to obtained input dataset. Additionally, method comprises determining operational, material, environmental, and compliance state associated with assets, and generating LLM response corresponding to generated LLM prompt. Additionally, method comprises outputting generated LLM response on user interface of user device (108).

## Description

The present invention generally relates to the field of data processing systems, and more particularly relates to methods and systems for asset lifecycle management for recurring usage of assets enabling a circular economy.

Sustainability has emerged as a key focus area for industries aiming to meet environmental, regulatory, and economic targets. A significant aspect of this effort is implementing circular economy principles, which emphasise the efficient management of products and their components at the end of their lifecycle. Managing circularity is inherently complex due to several factors. First, products consist of multiple heterogeneous components, each with distinct material compositions and behavioural histories based on their operational life. Second, information pertaining to these components is dispersed across diverse sources, making it imperative to establish a unified and contextualised knowledge repository. This knowledge may be needed to enable informed decision-making regarding component circularity by providing accurate, real-time insights into inventory status and the broader supply chain ecosystem. Furthermore, enabling circularity at scale necessitates automated, efficient, and precise workflows that minimise human intervention while ensuring the seamless integration of second-life (or beyond) components into new or existing products.

Conventionally, circularity processes depend on expert knowledge within an organization, where specialists utilise their understanding of component characteristics, material behaviours, and historical usage data to evaluate the feasibility of reuse, recovery, or recycling. Maintenance records are crucial in this process, often analysed manually or through basic digital aggregation methods to assess component fitness for circularity.

In business-to-business (B2B) environments, managing end-of-life components and materials is typically governed by the relationships among product operators, original equipment manufacturers (OEMs), and processing entities. The replacement, refurbishment, recovery, and recycling of components occur informally and ad hoc, with decision-making processes largely unstructured. Additionally, relevant information is scattered across various enterprise applications and records, including operational data, maintenance logs, supply chain documentation, and other disparate sources. This fragmentation requires manual effort to consolidate and interpret the data, introducing inefficiencies and potential inaccuracies in the circularity workflow.

Consequently, there is a need for an improved, reliable methods and systems for asset lifecycle management for recurring usage of assets enabling a circular economy and addressing at least the aforementioned issues of the prior arts.

Therefore, it is an object of the present invention to provide methods and systems for asset lifecycle management for recurring usage of assets enabling a circular economy.

The object of the present invention is achieved by a method for asset lifecycle management for recurring usage of assets enabling a circular economy. The method comprises obtaining an input dataset associated with one or more assets in a technical installation from a plurality of data sources. Further, the method comprises determining multidimensional contextual parameters associated with the one or more assets based on the obtained input dataset. The multidimensional contextual parameters comprise at least one of operational parameters, material parameters, environmental parameters, and legal and compliance parameters. Furthermore, the method comprises generating a semantic graph of the input dataset based on the determined the multidimensional contextual parameters. The semantic graph comprises the multidimensional contextual parameters represented as semantically correlated entities. Additionally, the method comprises determining a context of the obtained input dataset by identifying latent relationships between the determined multidimensional contextual parameters in the generated graphical representation.

Further, the method comprises extracting one or more entities from the generated graphical representation based on the determined context. Furthermore, the method comprises generating an LLM prompt corresponding to the obtained input dataset based on the extracted one or more entities. Additionally, the method comprises determining one or more operational state, material state, environmental state and compliance state associated with the one or more assets based on the generated LLM prompt. Further, the method comprises generating an LLM response corresponding to the generated LLM prompt by applying the determined one or more operational state, the material state, the environmental state, and the compliance state to a corresponding LLM model. The LLM response comprises a plurality of recommendations corresponding to recurring usage of the one or more assets, current performance of the one or more assets, health state of the one or more assets, and one or more actions to be performed on the one or more assets before usage of the one or more assets in a subsequent life cycle. Additionally, the method comprises outputting the generated LLM response on a user interface of a user device.

In an embodiment, for generating the semantic graph of the input dataset based on the determined the multidimensional contextual parameters, the method comprises extracting the multidimensional contextual parameters associated with the one or more assets from the obtained input dataset. Further, the method comprises identifying cross-domain dependencies between the multidimensional contextual parameters using a semantic representation model. Furthermore, the method comprises generating the graphical representation of the input dataset based on the identified cross-domain dependencies.

In another embodiment, for generating the graphical representation of the input dataset based on the determined the multidimensional contextual parameters, the method comprises assigning each of the determined the multidimensional contextual parameters to one or more nodes based on a type of the multidimensional contextual parameters. Further, the method comprises semantically correlating each of the determined multidimensional contextual parameters using an Artificial-Intelligence (AI) model. Furthermore, the method comprises generating one or more relationships between the assigned one or more nodes based on the correlation. Additionally, the method comprises generating a knowledge graph model of the input dataset based on the assigned one or more nodes and the generated one or more relationships.

In an embodiment, for extracting one or more entities from the generated graphical representation based on the determined context, the method comprises mapping the determined context with the semantically correlated entities in the generated graphical representation. Further, the method comprises determining at least one cluster of entities relevant to the determined context based on the mapping. Furthermore, the method comprises determining one or more relationships between the cluster of entities relevant to the determined context. Additionally, the method comprises generating a sub-graph comprising the determined at least one cluster of entities connected using the determined one or more relationships.

In an embodiment, for generating the LLM prompt corresponding to the obtained input dataset based on the extracted one or more entities, the method comprises determining user requirements and user preferences corresponding to the one or more assets. Further, the method comprises determining an operational history, an operational behaviour, a supply chain information, compliance records, a geographic information, and a maintenance history associated with the one or more assets. Furthermore, the method comprises correlating the determined user requirements and the user preferences with the determined operational history, the operational behaviour, the supply chain information, the compliance records, and the maintenance history. Additionally, the method comprises generating one or more questionnaires for predicting a performance of the one or more assets based on the correlation. Further, the method comprises generating the LLM prompt corresponding to the obtained input dataset based on the generated one or more questionnaires.

In an embodiment, the method further comprises validating the generated LLM response based on the determined user requirements, the user preferences, the determined operational history, the operational behaviour, the supply chain information, the compliance records, and the maintenance history. Further, the method comprises generating a performance score for the validated LLM response based on results of validation. The performance score indicates a performance level of the one or more assets during the subsequent lifecycle. Further, the method comprises predicting a performance of the one or more assets in the subsequent lifecycle based on the generated performance score.

In an embodiment, for validating the generated LLM response, the method comprises simulating the one or more assets in the subsequent lifecycle within a virtual environment based on the determined user requirements, the user preferences, the determined operational history, the operational behaviour, the supply chain information, the compliance records, and the maintenance history. Further, the method comprises determining a desired health state of the one or more assets, and the one or more actions to be performed on the one or more assets before usage of the one or more assets in the subsequent life cycle based on results of simulation.

In an embodiment, for simulating the one or more assets in the subsequent lifecycle, the method comprises predicting one or more subsequent life cycle scenarios for the one or more assets based on the generated LLM response. The one or more subsequent life cycle scenarios comprises one or more operational and geographic conditions for the one or more assets. Further, the method comprises generating one or more simulation models corresponding to the predicted one or more subsequent life cycle scenarios. Furthermore, the method comprises simulating the one or more assets in the subsequent lifecycle based on the generated one or more simulation models.

In an embodiment, for generating the LLM response corresponding to the generated LLM prompt, the method comprises determining a type of the one or more assets to be used in the subsequent life cycle. Further, the method comprises determining a LLM model corresponding to the determined type of the one or more assets. Furthermore, the method comprises validating whether the determined one or more operational state, the material state, the environmental state and the compliance state is applicable to the determined type of the one or more assets by applying the determined one or more operational state, the material state, the environmental state and the compliance state to the determined LLM model. Furthermore, the method comprises generating the plurality of recommendations corresponding to the current performance of the one or more assets, the health state of the one or more assets based on results of validation. Additionally, the method comprises generating one or more actions to be performed on the one or more assets before usage of the one or more assets in the subsequent life cycle based on the generated plurality of recommendations. Further, the method comprises generating the LLM response corresponding to the generated LLM prompt based on the generated plurality of recommendations and the generated one or more actions to be performed on the one or more assets before usage of the one or more assets in the subsequent life cycle.

In an embodiment, for generating the one or more actions to be performed on the one or more assets before usage of the one or more assets in the subsequent life cycle based on the generated plurality of recommendations, the method comprises determining a stage of the subsequent life cycle within which the one or more assets are to be used. Further, the method comprises determining a set of operational tests to be executed for the one or more assets before usage of the one or more assets in the subsequent life cycle based on the determined stage. Furthermore, the method comprises generating one or more reasons for executing the determined set of operational tests using explainable AI models.

In an embodiment, the method further comprises obtaining user feedback corresponding to the generated LLM response at a real-time. The user feedback indicates one or more errors associated with the generated LLM response. Further, the method comprises tuning the generated LLM prompt based on the obtained user feedback. The tuned LLM prompt comprises updated set of questionnaires based on the user feedback. Furthermore, the method comprises updating the LLM response based on the tuned LLM prompt.

In an embodiment, the method further comprises generating one or more Artificial-Intelligence (AI) driven insights corresponding to a behaviour and a performance of the one or more assets based on the generated LLM response. The one or more AI-driven insights comprises one or more predictive alerts corresponding to potential degradation risks of the one or more assets, potential gaps and abnormalities in the behaviour and the performance of the one or more assets, reuse feedback, recovery feedback, and recycling feedback for the one or more assets.

Another object of the present invention is achieved by a computing system comprising one or more processor(s), and a memory coupled to the one or more processor(s). The memory comprises an asset lifecycle management module stored in the form of machine-readable instructions executable by the one or more processor(s), wherein the asset lifecycle management module is capable of performing method steps described above.

Yet another object of the present invention is achieved by a computing environment comprising one or more user devices, one or more technical installation comprising one or more assets, a computing system communicatively coupled to the one or more technical installation and the one or more user devices via a network. The computing system comprises an asset lifecycle management module capable of performing method steps described above.

Yet another object of the present invention is achieved by a computer program product comprising machine-readable instructions stored therein that, when executed by one or more processor(s), cause the one or more processor(s) to perform method steps described above.

The above-mentioned and other features of the invention will now be addressed with reference to the accompanying drawings of the present invention. The illustrated embodiments are intended to illustrate, but not limit the invention.

The present invention is further described hereinafter with reference to illustrated embodiments shown in the accompanying drawings, in which:
- FIG. 1: is a block representation of a network architecture for a system capable of asset lifecycle management for recurring usage of assets enabling circular economy, according to an embodiment of the present invention;
- FIG. 2: is a block diagram of a computing system such as those shown in FIG. 1, depicting various components to implement embodiments of the present invention;
- FIG. 3: is a block diagram of an asset lifecycle management module, such as those shown in FIGs. 1 and 2, capable of asset lifecycle management for recurring usage of assets enabling circular economy, according to the embodiment of the present invention;
- FIG. 4: is a flow diagram depicting an exemplary method of generating response recommendations based on contextual insights by extracting comprehensive knowledge to generate a prompt for a Generative AI (GenAI) model, according to an embodiment of the present invention;
- FIG. 5: is a flow diagram depicting an exemplary method of interaction with a knowledge graph and subsequently with one or more large language models (LLMs), according to the embodiment of the present invention;
- FIG. 6A: is a schematic diagram depicting an exemplary method of generating one or more prompts and LLM response for an exemplary scenario of a process industry to evaluate a structural and thermal performance of a component, according to the embodiment of the present invention;
- FIG. 6B: is a flow diagram depicting an exemplary method of evaluating component testing from a materials management perspective, according to the embodiment of the present invention;
- FIG. 6C: is a flow diagram depicting an exemplary method of identifying applicable industry-specific and geography-specific regulatory mandates to assess compliance requirements based on both current and intended usage contexts, according to the embodiment of the present invention; and
- FIG. 7: is a process flowchart illustrating an exemplary method of asset lifecycle management for recurring usage of assets enabling a circular economy, according to the embodiment of the present invention.

Various embodiments are described with reference to the drawings, wherein like reference numerals are used to refer the drawings, wherein like reference numerals are used to refer to like elements throughout. In the following description, for the purpose of explanation, numerous specific details are set forth in order to provide thorough understanding of one or more embodiments. It may be evident that such embodiments may be practiced without these specific details.

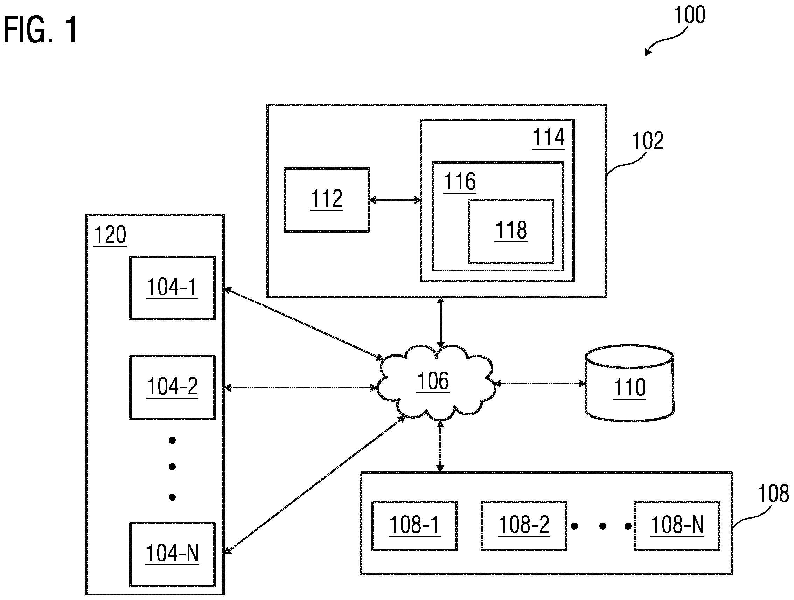

FIG. 1 is a block representation of a network architecture 100 for a system 102 capable of asset lifecycle management for recurring usage of assets 104 enabling circular economy, according to an embodiment of the present invention. Particularly, FIG. 1 depicts a computing system 102 which is capable of delivering remote applications in a computing environment /computer-simulated environment 118 for managing a technical installation 120 comprising one or more assets 104-1, 104-2, ......, 104-N (individually referred to as the asset 104, and collectively referred to as the assets 104). As used herein, "computing environment" refers to a processing environment comprising configurable computing physical and logical resources, for example, networks, servers, storage, applications, services, and the like, and data distributed over the computing platform. The computing environment provides on-demand network access to a shared pool of configurable computing physical and logical resources.

The computing system 102 is connected to the technical installation 120 via a communication network 106 (e.g., industrial ethernet or Internet, and the like). The technical installation 120 comprises the assets 104, and the assets 104 may comprise, but not limited to, objects, subjects, servers, robots, industrial equipment(s), machineries, pipelines, wirings, cables, tanks, humans, sensors, lighting systems, materials, products, and so on. The computing system 102 may be a public cloud, a private cloud, and/or a hybrid cloud or even an edge system configured to provide dedicated remote services to its users. The technical installation 120 may comprise one or more data acquisition devices (not shown). The data acquisition devices may include, but are not limited to, a Light Detection and Ranging (LIDAR) sensor, a Radio Detection and Ranging (RADAR) sensor, a Red Green Blue (RGB) depth sensor, a stereo camera, a camera, and so on.

Further, the computing system 102 may also be connected to one or more electronic devices 108-1, 108-2, ..., 108-N (individually referred to as the electronic device 108, and collectively referred to as the electronic devices 108) via the communication network 106. The electronic devices 108 may access the computing system 102 for asset lifecycle management for recurring usage of assets enabling a circular economy. Further, the electronic device 108 may be associated with a user, an individual, an administrator, a vendor, a technician, a worker, a specialist, a healthcare worker, an instructor, a supervisor, a team, an entity, an organization, a company, a facility, a bot, any other user, and combination thereof. In another example, the assets 104 and the technical installation 120 may be associated with/include, but are not limited to, a user, an object, a subject, a device, an equipment, a hardware, an infrastructure, an organization, a facility, a hospital, a healthcare facility, an exercise facility, a laboratory facility, an e-commerce warehouse, a merchant organization, an airline company, a hotel booking company, a company, an outlet, a manufacturing unit, an enterprise, an organization, an educational institution, a secured facility, a warehouse facility, a supply chain facility, a vehicle manufacturing/managing organization, a fleet operating company, any other facility, a combination thereof, and the like. The electronic device 108 may be used to provide input and/or receive output to/from the computing system 102, and/or to a database 110, respectively. The electronic device 108 may present to the user (not shown), one or more user interfaces for the user to interact with the computing system 102 and/or with the database 110 for asset lifecycle management for recurring usage of assets enabling a circular economy. The electronic devices 108 may include, but are not limited to, an electrical device, an electronic device, an electromechanical device, a computing device, and the like. The computing device may include, but are not limited to, a mobile, a laptop computer, a desktop computer, a tablet computer, a smartphone, a wearable device, a phablet computer, an augmented reality/virtual reality (AR) device, a metaverse-based device, a personal digital assistant (PDA), an edge computing device, a combination thereof, and the like. The electronic devices 108 may access remote applications (such as enabling users to manage asset lifecycle for recurring usage of assets enabling circular economy) via a mobile application, a web browser, a computer application, a portal, a platform, a framework, and the like.

The computing system 102 comprises a processor 112, and a memory 114. The memory 114 comprises a plurality of modules 116, and the plurality of modules may include a computing/computer-simulated environment 118. The computing system 102 further comprises a computing platform (not shown), a server (not shown) including hardware resources and an operating system (OS), a network interface, application program interfaces (APIs) (not shown). Further, the computing environment may include the database 110. The database 110 may comprise multidimensional contextual parameters, operational parameters, material parameters, environmental parameters, legal and compliance parameters, contextual data, latent relationship data, entities data, operational state data, material state data, environmental state data, compliance state data, assets data, recommendations data, current performance data, health state data, actions data, an operational history, an operational behaviour, a supply chain information, compliance records, a geographic information, a maintenance history, a combination thereof, and so on. The database 110 may be of type of a cloud database, a repository, a monetary database, a relational database, and so on. The database 110 stores the information relating to the technical installation 120 and the electronic device(s) 108. The database 110 is, for example, a structured query language (SQL) data store or a not only SQL (NoSQL) data store. The database 110 is configured as a cloud-based database implemented in the network architecture 100, where computing resources are delivered as a service over the computing platform. The database 110, according to another embodiment of the present invention, is a location on a file system directly accessible by the computing platform. The database 110 is configured to store asset lifecycle management data and other artifacts pertaining to the output of a plurality of modules 116 or the computer-simulated environment 118.

The network interface enables communication between the computing system 102, the technical installation 120, and the electronic device(s) 108. The interface (not shown in FIG. 1) may allow one or more users (not shown) at the electronic device(s) 108 to access asset lifecycle management data stored at the computing system 102 and perform one or more actions on the asset lifecycle management data as the same instance. The server may include one or more servers on which OS is installed. The servers may comprise one or more processors, one or more storage devices, such as memory units, for storing data and machine-readable instructions for example, applications and application programming interfaces (APIs), and other peripherals required for providing computing functionality. The computing platform is a platform which enables functionalities such as data reception, data processing, data rendering, data communication, and the like, using the hardware resources and the OS of the servers and delivering the aforementioned remote services using the application programming interfaces deployed therein. The computing platform may comprise a combination of dedicated hardware and software built on top of the hardware and the OS.

The technical installation 120 comprises one or more sensing units and/or capturing units and/or data acquisition devices. The one or more sensing units may be sensors embedded at multiple positions on/in proximity to the assets 104.

The one or more sensing unit may be configured for capturing real-time 3D multimedia raw input data and entity data associated with the one or more assets 104. The real-time 3D multimedia raw input data comprises audio data, video data, image data, environmental data, entity data, and so on. Each of the audio data, video data, and image data comprises data frames captured by corresponding the data acquisition devices. The object data comprises scene information, audio information of an equipment, audio information of an obstacle, a human, and the like. As used herein the communication network 106, refers to, for example, any wired or wireless network such as the internet, an intranet, that implements Bluetooth^{®} of Bluetooth Sig, Inc., a network that implements Wi-Fi^{®} of Wi-Fi Alliance Corporation, an ultra-wideband communication network (UWB), a wireless universal serial bus (USB) communication network, a communication network that implements ZigBee^{®} of ZigBee Alliance Corporation, a general packet radio service (GPRS) network, a mobile telecommunication network such as a global system for mobile (GSM) communications network, a code division multiple access (CDMA) network, a third generation (3G) mobile communication network, a fourth generation (4G) mobile communication network, a fifth generation (5G) mobile communication network, a sixth generation (6G) mobile communication network, a new radio (NR) communication network, a narrow band internet of things network (NB-IoT), an open radio access network (o-RAN), a long-term evolution (LTE) mobile communication network, a public telephone network, and the like., a local area network, a wide area network, an internet connection network, an infrared communication network, and the like, or a network formed from any combination of these networks.

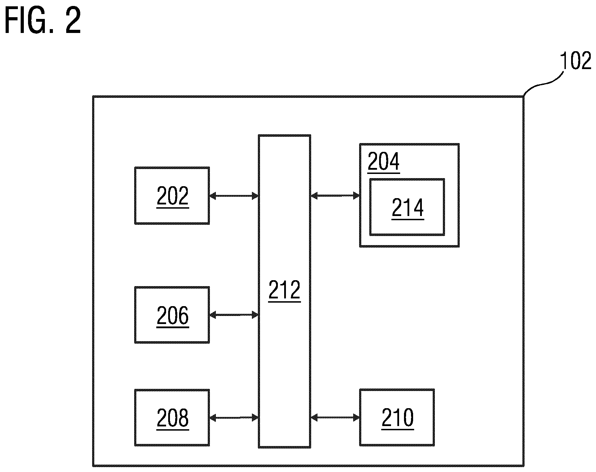

The computing platform comprises an asset lifecycle management module (not shown in FIG. 1). A detailed view of various components of the computing system 102 is shown in FIG 2. The computing system 102 may be a standalone system, an edge system, or a system on a cloud. In a preferred embodiment, the computing system 102 is a cloud-based system capable of asset lifecycle management for recurring usage of assets enabling a circular economy. To access the remote applications, asset lifecycle management data is required to be deployed on a computing platform, which is then accessed by a personnel on the electronic device(s) 108 to avail the remote applications.

The computing system 102 may comprise a plurality of servers or processors (also known as 'cloud infrastructure'), which are geographically distributed, and connected with each other via the communication network 106. A dedicated platform (hereinafter referred to as 'computing platform') may be installed on the servers/processors for providing above functionality as an application (hereinafter referred to as 'remote application'). The computing platform may comprise a plurality of software programs executed on one or more servers or processors of the computing system 102 to enable the delivery of the requested applications to the devices and their users.

Further, the computing system 102 may be implemented by way of a single device or a combination of multiple devices that may be operatively connected or networked together. The computing system 102 may be implemented in hardware or a suitable combination of hardware and software. The computing system 102 comprises one or more hardware processor(s) 112, and the memory 114. The memory 114 may include the plurality of modules 116. The system 102 may be a hardware device including the hardware processor 112 executing machine-readable program instructions for asset lifecycle management for recurring usage of assets enabling circular economy. Execution of the machine-readable program instructions by the hardware processor 112 may enable the computing system 102 to manage the asset lifecycle for recurring usage of assets enabling circular economy. The "hardware" may comprise a combination of discrete components, an integrated circuit, an application-specific integrated circuit, a field-programmable gate array, a digital signal processor, or other suitable hardware. The "software" may comprise one or more objects, agents, threads, lines of code, subroutines, separate software applications, two or more lines of code, or other suitable software structures operating in one or more software applications or on one or more processors.

The one or more hardware processors 112 may include, for example, microprocessors, microcomputers, microcontrollers, digital signal processors, central processing units, state machines, logic circuits, and/or any devices that manipulate data or signals based on operational instructions. Among other capabilities, hardware processor 112 may fetch and execute computer-readable instructions in the memory 114 operationally coupled with the computing system 102 for performing tasks such as data processing, input/output processing, and/or any other functions. Any reference to a task in the present disclosure may refer to an operation being or that may be performed on data.

Though few components and subsystems are disclosed in FIG. 1, there may be additional components and subsystems which is not shown, such as, but not limited to, ports, routers, repeaters, firewall devices, network devices, databases, network attached storage devices, servers, assets, machinery, instruments, facility equipment, emergency management devices, image capturing devices, sensors, vehicle communication infrastructure devices, any other devices, and combination thereof. The person skilled in the art should not be limiting the components/subsystems shown in FIG. 1. Although FIG. 1 illustrates the computing system 102, and the electronic devices 108 connected to the database 110, one skilled in the art can envision that the computing system 102, and the electronic devices 110 can be connected to databases, servers, via the communication network 106.

Those of ordinary skilled in the art will appreciate that the hardware depicted in FIG. 1 may vary for particular implementations. For example, other peripheral devices such as an optical disk drive and the like, local area network (LAN), wide area network (WAN), wireless (e.g., wireless-fidelity (Wi-Fi)) adapter, graphics adapter, disk controller, input/output (I/O) adapter, Internet of Things (IoT) devices, digital twin devices, edge computing devices, Artificial Intelligence (AI)/ Machine Learning (ML) devices may also be used in addition or in place of the hardware depicted. The depicted example is provided for explanation only and is not meant to imply architectural limitations concerning the present disclosure.

Those skilled in the art will recognise that, for simplicity and clarity, the full structure and operation of all data processing systems suitable for use with the present disclosure are not being depicted or described herein. Instead, only so much of the computing system 102 as is unique to the present disclosure or necessary for an understanding of the present disclosure is depicted and described. The remainder of the construction and operation of the computing system 102 may conform to any of the various current implementations and practices that were known in the art.

In an exemplary embodiment, the computing system 102 may obtain an input dataset associated with one or more assets 104 in the technical installation 120 from a plurality of data sources (not shown). The plurality of data sources may include, but is not limited to, sensors, databases, or external monitoring systems that capture information regarding the assets 104. For instance, consider a technical installation 120 in the form of a manufacturing plant. In this scenario, the assets 104 may include machinery, robotic arms, or conveyor belts. The computing system 102 may obtain input datasets from diverse data sources such as temperature sensors, vibration monitors, and maintenance logs. For example, a temperature sensor attached to a critical piece of machinery may send real-time temperature readings to the computing system 102. Simultaneously, vibration data from accelerometers on rotating equipment and maintenance records from a centralised database may also be gathered. In another example, consider a power generation facility where the assets 104 include turbines, transformers, and circuit breakers. The computing system 102 may collect datasets from supervisory control and data acquisition (SCADA) systems, sensor arrays monitoring equipment health, and historical performance logs. For instance, the computing system 102 may receive data on turbine speed from rotational sensors, temperature and pressure levels from environmental sensors, and maintenance schedules from a plant management system. In both examples, the computing system 102 aggregates the heterogeneous datasets to perform further analysis, monitor asset conditions, predict failures, or optimise performance.

In an exemplary embodiment, the computing system 102 may determine multidimensional contextual parameters associated with the one or more assets 104 based on the obtained input dataset. The multidimensional contextual parameters comprise, but not limited to, operational parameters, material parameters, environmental parameters, legal and compliance parameters, and the like. For example, the multidimensional contextual parameters represent a set of variables that provide an understanding of a behaviour, conditions, and performance of the assets 104 within the technical installation 120. By analysing the multidimensional contextual parameters, the computing system 102 may assess the operational status, physical characteristics, environmental influences, and regulatory compliance of the assets 104. The multidimensional approach enables a thorough evaluation of asset performance and supports decision-making processes.

The multidimensional contextual parameters refer to a collection of variables derived from the input dataset that describe the operational state, material composition, surrounding environmental conditions, and legal compliance of one or more assets 104. These parameters enable the computing system 102 to monitor real-time asset behaviour, identify anomalies, predict failures, and ensure adherence to regulatory standards. For example, the operational parameters describe the functional and performance-related characteristics of the assets 104. For example, in a wind turbine system, operational parameters may include rotor speed, blade pitch angle, and power output. By analysing these variables, the computing system 102 can detect mechanical wear or performance deviations. Similarly, in an automated assembly line, operational parameters such as cycle time, torque applied by robotic arms, and energy consumption provide valuable insights into production efficiency and equipment health. By continuously monitoring these parameters, the system can identify operational inefficiencies and implement corrective measures to maintain optimal performance.

Further, the material parameters may pertain to a physical and chemical properties of the materials used by or within the assets 104. Furthermore, the environmental parameters refer to external factors that affect the operation and performance of the assets 104. Additionally, the legal and compliance parameters category encompasses variables related to regulatory frameworks and safety standards that the assets 104 may need to adhere during operation.

In an exemplary embodiment, the computing system 102 may generate a semantic graph of the input dataset based on the determined the multidimensional contextual parameters. The semantic graph comprises the multidimensional contextual parameters represented as semantically correlated entities. This implies that the graph captures the relationships and dependencies between different parameters in a structured, interpretable format. By constructing a semantic graph, the computing system 102 may model complex interactions, facilitate knowledge extraction, and enhance decision-making processes within the technical installation 120. The semantic graph may be a data structure that represents information as nodes (entities) and edges (relationships) in a graph format. In the context of the computing system 102, the nodes correspond to the multidimensional contextual parameters, and the edges depict the semantic relationships between these parameters. This graphical representation allows the computing system 102 to establish logical connections between diverse data points, identify patterns, and infer new insights through relational analysis. Unlike traditional datasets, which may present information in isolated or tabular formats, a semantic graph emphasises the interconnectivity of data, enabling a more comprehensive understanding of complex systems.

For example, in a wind turbine monitoring system, the computing system 102 may generate the semantic graph where each node represents a contextual parameter such as rotor speed, ambient temperature, blade material, and legal compliance status. The edges between these nodes signify the semantic relationships. If an increase in ambient temperature correlates with a rise in rotor speed and heightened mechanical stress on the blade, the graph reflects these dependencies. This semantic graph allows the system 102 to track how changes in environmental parameters influence operational performance and ensures that legal thresholds for turbine operation are maintained.

In another scenario involving a smart manufacturing facility, the semantic graph may represent contextual parameters such as production cycle time, material composition, equipment vibration levels, and regulatory compliance. If the system 102 detects that specific material properties lead to increased vibration during high-speed operations, it can establish a semantic link between material composition and vibration levels.

In an exemplary embodiment, the computing system 102 may determine a context of the obtained input dataset by identifying latent relationships between the determined multidimensional contextual parameters in the generated graphical representation. This process involves analysing the semantic graph to uncover implicit, hidden, or non-obvious connections that are not directly represented in the raw data. By detecting these latent relationships, the computing system 102 may derive deeper insights, reveal complex dependencies, and understand the underlying patterns within the input dataset. The context, in this scenario, refers to the broader meaning or situational framework derived from the relationships between multidimensional contextual parameters. Rather than treating each parameter in isolation, the computing system 102 identifies how these parameters interact and influence each other, providing a comprehensive view of asset behaviour within the technical installation 120. This contextual awareness allows the system 102 to make informed inferences, correlate disparate data points, and predict potential outcomes by interpreting the semantic relationships embedded in the graph.

The latent relationships may be underlying associations between parameters that may not be immediately visible, however, may be inferred through advanced data analysis. These relationships often reveal cause-and-effect linkages, temporal dependencies, or multi-variable correlations that emerge when analysing the dataset as an interconnected whole. By identifying latent relationships, the computing system 102 goes beyond simple data aggregation to uncover patterns that may be difficult to detect through conventional analysis. For example, in a wind turbine monitoring system, the computing system 102 may determine a latent relationship between increasing ambient temperature and accelerated blade degradation. While the operational parameters (such as rotor speed and blade stress) and environmental parameters (such as temperature) may appear independently in the dataset, the system 102 may infer that prolonged exposure to higher temperatures exacerbates material wear. This contextual understanding allows the system 102 to predict maintenance needs before a mechanical failure occurs and recommend operational adjustments to mitigate wear under extreme conditions.

In a smart manufacturing facility, the system 102 may identify latent relationships between equipment vibration levels, production speed, and product quality. For instance, when vibration increases beyond a threshold during high-speed operations, subtle shifts in material alignment may compromise the precision of manufactured components. Although these parameters are recorded separately, the semantic graph allows the system 102 to detect a hidden relationship where higher speeds indirectly affect product quality through vibration. This insight enables the system to suggest optimal operating conditions that balance production efficiency with quality assurance. By deriving a comprehensive context, the system 102 may predict future outcomes, optimise operational strategies, and ensure compliance with regulatory standards across diverse technical installations.

In an exemplary embodiment, the computing system 102 may extract one or more entities (not shown) from the generated graphical representation based on the determined context. This process involves identifying and isolating key components, parameters, or data points that are relevant to the operational analysis, decision-making, or further processing. The entities extracted from the semantic graph represent distinct elements or concepts that are semantically linked to the contextual relationships established by the system 102. The entities may include operational, material, environmental, legal parameters, or other specific characteristics related to the assets within the technical installation 120. In this context, entities refer to identifiable and meaningful data objects derived from the interconnected parameters in the semantic graph. Each entity encapsulates specific information relevant to asset behaviour, system conditions, or compliance requirements. The extraction process allows the computing system 102 to focus on the most critical data points, facilitating targeted analysis, system optimization, and improved operational oversight.

For instance, in a wind turbine monitoring system, the computing system 102 may extract entities such as rotor speed, blade temperature, and maintenance status. If the determined context reveals a latent relationship between increased ambient temperature and accelerated blade degradation, these entities are extracted for further analysis. By isolating these entities, the system can monitor blade health, predict maintenance needs, and initiate preventive measures to avoid mechanical failures.

In a smart manufacturing facility, the computing system 102 may extract entities such as production speed, vibration frequency, and equipment calibration status.

If the determined context indicates that high-speed operations cause increased vibration levels, leading to deviations in product quality, these entities become focal points for further monitoring and process adjustments. The system 102 may use this information to recommend optimal production speeds and schedule equipment maintenance to maintain quality standards.

In an exemplary embodiment, the computing system 102 may generate a large language model (LLM) prompt corresponding to the obtained input dataset based on the extracted one or more entities. Given a selection of component of interest, the system 102 obtains all elements present in vicinity at a certain depth via traversal algorithms such as Breadth First Search (BFS), and the like implemented as graph queries such as a simple protocol and resource description framework (RDF) query language (SPARQL) (i.e., a query language for databases structured as RDF graphs). The results of the queries are then parsed into a structured format and then passed as context to the LLM prompt.

This process involves constructing a structured or natural language query that encodes the contextual information derived from the extracted entities. The LLM prompt serves as an input for a pre-trained large language model (LLM), enabling the system 102 to analyse complex datasets, interpret relationships, and generate meaningful outputs such as summaries, insights, or predictions. By creating an LLM prompt grounded in the extracted entities, the computing system 102 enhances the ability of the LLM model to deliver context-aware responses tailored to specific operational, environmental, material, or compliance-related queries.

An LLM prompt is an input query that guides a response of the LLM. This prompt encapsulates relevant information and defines the task the model is expected to perform, such as answering questions, generating reports, detecting anomalies, or providing recommendations. By grounding the prompt in the extracted entities, the computing system 102 ensures that output of the LLM is precise, relevant, and aligned with the contextual understanding derived from the semantic graph.

For example, in a wind turbine monitoring system, if the extracted entities include rotor speed, blade temperature, and ambient temperature, the computing system 102 may generate an LLM prompt such as, "analyse the relationship between increased ambient temperature and accelerated blade degradation in wind turbines. Given the current rotor speed of 3000 RPM and a blade temperature of 75°C, predict the time until maintenance is required and suggest operational adjustments to minimise wear". This prompt uses the extracted entities to request a comprehensive analysis, facilitating the identification of performance risks and the generation of actionable maintenance strategies.

In a smart manufacturing facility, if the system 102 extracts entities such as vibration frequency, production speed, and equipment calibration status, the generated LLM prompt may be as, "given the observed increase in vibration frequency to 120 Hz during high-speed operations, evaluate its impact on product quality and suggest calibration adjustments to maintain tolerances. Include any potential causes of misalignment and strategies for reducing vibration-related defects". This prompt enables the LLM to analyse how operational conditions influence product quality, providing insights for optimising production processes while maintaining precision standards.

The generation of LLM prompts may also be adapted to dynamic operational contexts. For instance, if new data suggests emerging risks or changing conditions, the system can refine or regenerate prompts to capture evolving relationships. This adaptability ensures that the output of the LLM remain accurate and relevant as the technical environment changes. Additionally, LLM prompts can support compliance and reporting functions. In the case of legal and regulatory parameters, the computing system 102 might extract entities related to operational thresholds and legal standards. An example prompt may be, "identify potential regulatory violations based on the current turbine operational speed of 3200 RPM and temperature exceeding 80°C. Provide a risk assessment and suggest corrective actions to ensure compliance with ISO 9001 standards". This type of prompt enables the LLM to conduct a thorough compliance analysis, ensuring the system 102 adheres to industry regulations and mitigating potential legal risks.

In an exemplary embodiment, the computing system 102 may determine one or more operational state, material state, environmental state and compliance state associated with the one or more assets 104 based on the generated LLM prompt. This process involves using the prompt to query a Large Language Model (LLM), which interprets the contextual information encoded in the prompt and analyses the input dataset to classify and describe the current condition of the assets within the technical installation 120. The computing system 102 may accurately assess the multi-dimensional states of the assets and provide insights for monitoring, decision-making, and compliance verification. The operational state refers to the functional condition and performance characteristics of the asset. This includes parameters such as operational efficiency, system health, and performance metrics. The computing system 102 can evaluate whether the asset is functioning normally, under stress, in a degraded state, or nearing failure. For example, in a wind turbine monitoring system, if the LLM prompt captures entities such as rotor speed, blade temperature, and vibration frequency, the system 102 may determine whether the turbine is operating under normal conditions, experiencing abnormal vibrations, or requiring immediate maintenance due to excessive stress on the blades.

The material state describes the physical integrity and condition of the materials constituting the asset 104. This state encompasses factors such as wear, corrosion, fatigue, and structural degradation. For instance, in a smart manufacturing facility, if the LLM prompt references extracted entities such as production speed, equipment vibration, and material properties, the system 102 may determine whether machine components are experiencing increased wear due to prolonged high-speed operations or whether material fatigue is likely to cause mechanical failure.

The environmental state represents the external conditions surrounding the asset 104 that may influence its performance, safety, and longevity. This includes variables such as temperature, humidity, pressure, and external loads. Further, the compliance state refers to the adherence of the assets to legal, regulatory, and operational standards. This state involves evaluating whether the asset operates within established guidelines, safety limits, and quality standards. For instance, in a wind turbine system, if the generated LLM prompt captures compliance thresholds related to rotational speed and temperature, the system may determine whether the turbine exceeds permissible operational limits under ISO 9001 regulations. If the asset operates outside these limits, the system can flag non-compliance and recommend corrective actions.

For example, in a wind turbine, if the prompt indicates a rise in both ambient temperature and blade stress, the system may determine that the operational state is "degraded", the material state is "at risk of fatigue", the environmental state is "high temperature", and the compliance state is "non-compliant due to thermal overload". This multi-dimensional assessment enables precise diagnostics and predictive maintenance. In a smart manufacturing context, if the LLM prompt reveals an increase in vibration frequency during high-speed operations, the system 102 may classify the operational state as "unstable", the material state as "prone to misalignment", the environmental state as "high mechanical stress", and the compliance state as "compliant but approaching tolerance limits". Such insights allow the system 102 to recommend adjustments to stabilise operations and prevent future failures.

In an exemplary embodiment, the computing system 102 may generate an LLM response corresponding to the generated LLM prompt by applying the determined one or more operational state, the material state, the environmental state, and the compliance state to a corresponding LLM model. The LLM response comprises, but not limited to, a plurality of recommendations corresponding to recurring usage of the one or more assets, current performance of the one or more assets, health state of the one or more assets, one or more actions, and the like, to be performed on the one or more assets before usage of the one or more assets in a subsequent life cycle. In an exemplary embodiment, the computing system 102 may output the generated LLM response on a user interface of a user device such as the electronic device 108. This process involves interpreting the contextual information encoded in the prompt and combining it with the real-time conditions of the asset 104 to produce a comprehensive response. The LLM response may include a variety of outputs, such as recommendations for the recurring usage of the assets, evaluations of the current performance, assessments of the health state, and suggested actions to be performed on the assets before they enter the next operational cycle. The computing system 102 may present the generated LLM response on a user interface of a user device, such as the electronic device 108, allowing users to interact with and implement the provided insights effectively.

In the context of an industrial manufacturing plant, the system 102 may determine that a production asset exhibits an operational state of increased vibration frequency, a material state of mechanical fatigue, an environmental state of elevated ambient temperature, and a compliance state that remains within permissible limits. Based on these conditions, the LLM response may suggest reducing the production speed during peak hours to minimise further mechanical degradation. It might also indicate that the cutting tool of the machinery has reached 75% of its operational lifespan and requires replacement within the next 48 hours to avoid downtime. Additionally, the response could propose recalibrating the machinery to counteract the increased vibration and prevent future misalignment issues. These outputs provide manufacturing supervisors with actionable insights to optimise equipment performance and maintain consistent production quality.

In the aerospace industry, the computing system 102 may analyse the operational state of an aircraft engine, revealing minor fluctuations in turbine pressure. The material state might indicate early-stage wear on the turbine blades, while the environmental state could reflect exposure to extreme cold temperatures during high-altitude operation. The compliance state, however, may confirm that the engine remains within safety regulations. In this scenario, the LLM response may recommend increased monitoring of turbine pressure and a detailed inspection of the blade surfaces during the next maintenance cycle. It may also suggest implementing operational adjustments, such as controlling thrust levels during extended cold-weather flights, to reduce mechanical stress. By providing these tailored recommendations, the system supports proactive maintenance and enhances operational safety in the aerospace domain.

In a healthcare setting, the system could evaluate medical equipment, such as an MRI machine, where the operational state indicates intermittent performance irregularities, the material state reveals electromagnetic component degradation, and the environmental state identifies fluctuating room temperature. Despite these conditions, the compliance state may show that the equipment still meets regulatory standards. The LLM response may propose scheduling preventative maintenance to replace degraded components and stabilising the room temperature to maintain image quality. Additionally, the response may recommend recalibrating the machine after repairs to ensure continued compliance with medical imaging guidelines. This level of analysis enables healthcare facilities to sustain high-performance diagnostics while reducing the risk of equipment failure.

In the context of renewable energy systems, such as solar farms, the computing system 102 may determine that the operational state of a photovoltaic panel indicates reduced energy output, the material state reflects minor surface erosion, the environmental state shows prolonged exposure to high humidity, and the compliance state remains within acceptable energy efficiency thresholds. The LLM response might suggest cleaning the panel surfaces to remove accumulated debris, inspecting the protective coatings for wear, and scheduling periodic assessments during the rainy season to mitigate further efficiency loss. By acting on these recommendations, solar farm operators can maintain optimal energy production while ensuring long-term asset viability.

In the telecommunications sector, the system 102 may assess a network tower where the operational state reveals fluctuating signal strength, the material state indicates minor corrosion on antenna components, the environmental state reflects exposure to high wind speeds, and the compliance state confirms adherence to broadcast frequency regulations. The LLM response could recommend inspecting and reinforcing the antenna structure to withstand wind stress, applying anti-corrosion treatments to extend component life, and conducting regular signal calibration checks. These insights enable telecommunications providers to maintain reliable service delivery while extending the operational lifespan of critical infrastructure. The generated LLM response is displayed on a user interface, allowing users across various domains to implement proactive strategies, ensure compliance, and maintain the efficient operation of complex systems.

FIG. 2 is a block diagram of a computing system such as those shown in FIG. 1, depicting various components to implement embodiments of the present invention. In FIG. 2, the computing system 102 comprises a processor(s) 202, an accessible memory 204, a communication interface 206, a network interface 208, an input/output unit 210, and a bus 212.

The processor(s) 202, as used herein, means any type of computational circuit, such as, but not limited to, a microprocessor unit, microcontroller, complex instruction set computing microprocessor unit, reduced instruction set computing microprocessor unit, very long instruction word microprocessor unit, explicitly parallel instruction computing microprocessor unit, graphics processing unit, digital signal processing unit, or any other type of processing circuit. The processor(s) 202 may also include embedded controllers, such as generic or programmable logic devices or arrays, application specific integrated circuits, single-chip computers, and the like.

The memory 204 may be non-transitory volatile memory and non-volatile memory. The memory 204 may be coupled for communication with the processor(s) 202, such as being a computer-readable storage medium. The processor(s) 202 may execute machine-readable instructions and/or source code stored in the memory 204. A variety of machine-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like. In the present embodiment, the memory 204 comprises an asset lifecycle management module 214 stored in the form of machine-readable instructions on any of the above-mentioned storage media and may be in communication with and executed by the processor(s) 202.

When executed by the processor(s) 202, the asset lifecycle management module 214 causes the processor(s) 202 to manage asset lifecycle for recurring usage of assets enabling circular economy. The asset lifecycle management module 214 causes the processor(s) 202 to obtain an input dataset associated with one or more assets 104 in the technical installation 120 from a plurality of data sources. Further, the asset lifecycle management module 214 may determine multidimensional contextual parameters associated with the one or more assets 104 based on the obtained input dataset. The multidimensional contextual parameters comprise, but not limited to, operational parameters, material parameters, environmental parameters, legal and compliance parameters, and the like. Furthermore, the asset lifecycle management module 214 may generate a semantic graph of the input dataset based on the determined the multidimensional contextual parameters. The semantic graph comprises the multidimensional contextual parameters represented as semantically correlated entities. Additionally, the asset lifecycle management module 214 may determine a context of the obtained input dataset by identifying latent relationships between the determined multidimensional contextual parameters in the generated graphical representation.

Further, the asset lifecycle management module 214 may extract one or more entities from the generated graphical representation based on the determined context. Furthermore, the asset lifecycle management module 214 may generate an LLM prompt corresponding to the obtained input dataset based on the extracted one or more entities. Additionally, the asset lifecycle management module 214 may determine one or more operational state, material state, environmental state and compliance state associated with the one or more assets based on the generated LLM prompt. Further, the asset lifecycle management module 214 may generate an LLM response corresponding to the generated LLM prompt by applying the determined one or more operational state, the material state, the environmental state, and the compliance state to a corresponding LLM model. The LLM response comprises a plurality of recommendations corresponding to recurring usage of the one or more assets, current performance of the one or more assets, health state of the one or more assets, one or more actions, and the like to be performed on the one or more assets before usage of the one or more assets in a subsequent life cycle. Additionally, the asset lifecycle management module 214 may output the generated LLM response on a user interface of a user device.

In an exemplary embodiment, for generating the semantic graph of the input dataset based on the determined the multidimensional contextual parameters, the asset lifecycle management module 214 may extract the multidimensional contextual parameters associated with the one or more assets 104 from the obtained input dataset.

Further, the asset lifecycle management module 214 may identify cross-domain dependencies between the multidimensional contextual parameters using a semantic representation model. Furthermore, the asset lifecycle management module 214 may generate the graphical representation of the input dataset based on the identified cross-domain dependencies.

For example, the semantic graph serves as a structured visualization where the multidimensional contextual parameters are represented as interconnected entities, enabling a comprehensive understanding of how various factors influence the lifecycle of the assets. The semantic graph is a data structure that represents information through nodes and edges. In this context, the nodes correspond to different multidimensional contextual parameters such as operational, material, environmental, and compliance states-while the edges depict the relationships between these parameters. This type of graph enables the system to capture complex interdependencies, making it easier to analyse and interpret how changes in one domain may affect others. The asset lifecycle management module 214 utilises this representation to facilitate accurate decision-making, enhance asset performance monitoring, and ensure compliance with regulatory standards.

To construct the semantic graph, the asset lifecycle management module 214 may first extract the multidimensional contextual parameters associated with the assets from the input dataset. This involves processing data related to the operation of the assets 104, material composition, environmental conditions, and regulatory compliance. For instance, in a manufacturing context, the extracted parameters may include machine temperature, vibration frequency, component wear, humidity levels, and compliance with safety protocols.

Subsequently, the asset lifecycle management module 214 may identify cross-domain dependencies using a semantic representation model. Cross-domain dependencies refer to the interrelationships between parameters from different domains. For example, an increase in ambient temperature (environmental parameter) may accelerate component wear (material parameter), which in turn affects operational efficiency (operational parameter). The semantic representation model applies natural language processing (NLP) and knowledge graph techniques to map and quantify these relationships. By doing so, the asset lifecycle management module 214 may identify patterns, causal links, potential risks that would otherwise remain hidden, and the like.

Finally, the asset lifecycle management module 214 generates the graphical representation of the input dataset based on these identified cross-domain dependencies. This graphical representation captures the dynamic and interconnected nature of asset states. For example, if a wind turbine is experiencing increased vibration levels (operational parameter), the graph may also link this observation to increased mechanical stress on the rotor blades (material parameter) and a risk of exceeding safety guidelines (compliance parameter). This visualization provides a holistic view of asset behaviour and facilitates predictive maintenance and operational optimization.

In an aerospace industry, the asset lifecycle management module 214 may extract parameters such as turbine blade temperature (operational), metal fatigue (material), altitude pressure changes (environmental), adherence to FAA safety regulations (compliance), and the like. The asset lifecycle management module 214 may identify that prolonged exposure to low-pressure environments accelerates metal fatigue, increasing the likelihood of regulatory non-compliance due to safety risks. The resulting semantic graph may show how these factors are interconnected, allowing engineers to predict potential engine failures and schedule proactive maintenance.

In a renewable energy system, the asset lifecycle management module 214 may extract parameters such as solar panel output (operational), panel surface degradation (material), weather patterns (environmental), and energy efficiency compliance (compliance). By analysing cross-domain dependencies, the asset lifecycle management module 214 may identify that extended exposure to high ultraviolet (UV) radiation increases surface degradation, which reduces energy output. The semantic graph may visually represent these dependencies, enabling operators to plan for cleaning schedules, panel replacements, and performance optimization strategies.

In the telecommunications infrastructure, the asset lifecycle management module 214 may extract parameters such as signal strength (operational), antenna corrosion (material), wind speed (environmental), and frequency regulations (compliance). The asset lifecycle management module 214 may reveal that corrosion exacerbated by strong winds reduces signal efficiency and risks regulatory non-compliance. The semantic graph may illustrate these relationships, prompting maintenance teams to prioritise repairs on affected towers.

In a smart city context, the asset lifecycle management module 214 may process data from traffic sensors, including vehicle flow rates (operational), sensor wear (material), weather conditions (environmental), and municipal traffic guidelines (compliance). The asset lifecycle management module 214 may identify that heavy rain increases sensor degradation and causes inconsistencies in vehicle tracking, leading to data discrepancies with regulatory reporting. The resulting graph may present these cross-domain dependencies, supporting better infrastructure planning and sensor maintenance.

In logistics and supply chain management, the asset lifecycle management module 214 may extract contextual parameters such as delivery times (operational), vehicle part wear (material), road conditions (environmental), and emissions regulations (compliance). The asset lifecycle management module 214 may identify that poor road conditions increase vehicle wear, which slows deliveries and raises emissions beyond allowable limits. The semantic graph would highlight these interdependencies, helping logistics managers optimise delivery routes, schedule vehicle maintenance, and ensure regulatory compliance.

In another exemplary embodiment, for generating the graphical representation of the input dataset based on the determined the multidimensional contextual parameters, the asset lifecycle management module 214 may assign each of the determined the multidimensional contextual parameters to one or more nodes based on a type of the multidimensional contextual parameters. Further, the asset lifecycle management module 214 may semantically correlate each of the determined multidimensional contextual parameters using an artificial-intelligence (AI) model. Furthermore, the asset lifecycle management module 214 may generate one or more relationships between the assigned one or more nodes based on the correlation. Additionally, asset lifecycle management module 214 may generate a knowledge graph model of the input dataset based on the assigned one or more nodes and the generated one or more relationships.

For example, this process involves four key stages assigning the multidimensional contextual parameters to nodes based on their type, semantically correlating these parameters using an artificial intelligence (AI) model, generating relationships between the nodes based on these correlations, and creating a knowledge graph model of the input dataset. This graphical representation allows for a structured, interconnected visualization of how various contextual parameters interact across different asset dimensions. To begin, the asset lifecycle management module 214 assigns each multidimensional contextual parameter to one or more nodes based on the type of the parameter. These types may include operational parameters, material parameters, environmental parameters, compliance parameters, and the like. Each node represents a specific attribute of an asset, providing a clear and categorised structure. For instance, in the context of a manufacturing facility, operational parameters such as machine speed or temperature are assigned to operational nodes, while material properties like component wear or fatigue are assigned to material nodes.

After node assignment, the AI model semantically correlates the multidimensional contextual parameters. Semantic correlation involves identifying meaningful relationships and dependencies between parameters based on patterns learned from historical data and domain knowledge. The AI model can process large datasets to detect both direct and latent relationships, ensuring that even complex and non-obvious dependencies are recognised. For example, in an aerospace system, the AI model may identify that increased engine vibration (operational parameter) is linked to metal fatigue in turbine blades (material parameter) and accelerated by high-altitude pressure changes (environmental parameter).

Once these correlations are identified, the asset lifecycle management module 214 may generate relationships between the nodes. Each relationship is an edge in the graph, connecting semantically correlated nodes to represent the interdependencies. These relationships are not limited to direct causal links but may also reflect statistical associations, functional dependencies, or temporal patterns. For example, in a renewable energy system, the AI model may establish that high humidity accelerates panel degradation, which reduces energy efficiency and risks exceeding compliance limits. This insight is represented as connected nodes and edges, illustrating how environmental, material, and compliance parameters influence each other.

Finally, the asset lifecycle management module 214 may generate a knowledge graph model based on the assigned nodes and the established relationships. A knowledge graph is a specialised form of a semantic graph where the nodes represent entities (in this case, contextual parameters) and the edges represent meaningful, often domain-specific, relationships. This graph enables advanced querying, reasoning, and visualization of asset behaviour and lifecycle. In a telecommunications context, for example, the knowledge graph may connect a node representing antenna corrosion (material parameter) to signal degradation (operational parameter) through an edge labelled cause, while also linking wind speed (environmental parameter) as a contributing factor.

In the automotive industry, the asset lifecycle management module 214 may extract parameters such as engine temperature (operational), oil viscosity (material), ambient temperature (environmental), and emissions limits (compliance). The AI model may identify that increased ambient temperature degrades oil viscosity, raising engine temperature and increasing emissions. The resulting knowledge graph would show these relationships, allowing vehicle maintenance systems to recommend timely oil changes to prevent performance degradation and regulatory violations. In a smart city infrastructure context, the asset lifecycle management module 214 may process data from traffic lights, including traffic density (operational), sensor calibration (material), weather conditions (environmental), and regulatory traffic flow guidelines (compliance). The knowledge graph could reveal that misaligned sensors during extreme weather cause inaccurate traffic density readings, which leads to improper light synchronization and regulatory non-compliance. This graph helps urban planners optimise traffic management and reduce congestion.

In logistics and supply chain management, the asset lifecycle management module 214 may process parameters such as delivery time (operational), vehicle part wear (material), road quality (environmental), and fuel efficiency standards (compliance). The AI model could identify that poor road conditions increase vehicle wear, delaying deliveries and reducing fuel efficiency. The knowledge graph represents these relationships, supporting route optimization, predictive maintenance, and adherence to regulatory standards. In healthcare systems, the asset lifecycle management module 214 may track parameters such as MRI machine performance (operational), component lifespan (material), room temperature stability (environmental), and medical imaging guidelines (compliance). The AI model may identify that unstable room temperatures reduce imaging accuracy and increase wear on magnetic components. The knowledge graph would link these parameters, enabling proactive maintenance scheduling and ensuring compliance with diagnostic accuracy standards.

In an aerospace maintenance, the asset lifecycle management module 214 may process data on aircraft engine cycles (operational), turbine blade wear (material), flight altitude (environmental), and aviation safety standards (compliance). The AI model may establish that frequent high-altitude flights accelerate blade wear, raising safety concerns. The knowledge graph connects these variables, allowing maintenance teams to prioritise inspections for high-risk engines.

In an exemplary embodiment, for extracting one or more entities from the generated graphical representation based on the determined context, the asset lifecycle management module 214 may map the determined context with the semantically correlated entities in the generated graphical representation. Further, the asset lifecycle management module 214 may determine at least one cluster of entities relevant to the determined context based on the mapping. Furthermore, the asset lifecycle management module 214 may determine one or more relationships between the cluster of entities relevant to the determined context. Additionally, the asset lifecycle management module 214 may generate a sub-graph comprising the determined at least one cluster of entities connected using the determined one or more relationships.

For example, this process results in a knowledge graph that represents the interconnected relationships between operational, material, environmental, and compliance parameters. The asset lifecycle management module 214 may extract and categorise contextual parameters. For example, in a manufacturing system, machine temperature is assigned to an operational node, while material fatigue is assigned to a material node. The AI model then identifies cross-domain dependencies, such as how increased machine temperature accelerates component wear. Based on these correlations, edges are created between nodes to reflect these relationships, forming a knowledge graph that enables advanced analysis and decision-making. In the aerospace industry, the system may link engine vibration (operational) to turbine blade fatigue (material) and altitude pressure changes (environmental), facilitating predictive maintenance. For renewable energy, the graph may connect panel degradation (material) to weather patterns (environmental) and efficiency compliance (regulatory), helping optimise maintenance schedules. In telecommunications, the system may identify that wind-driven antenna corrosion (material) degrades signal strength (operational), improving fault prediction. By creating a knowledge graph, the asset lifecycle management module 214 allows for real-time monitoring, predictive analysis, and informed decision-making across industries, enhancing asset performance and ensuring regulatory compliance.

In an exemplary embodiment, for generating the LLM prompt corresponding to the obtained input dataset based on the extracted one or more entities, the asset lifecycle management module 214 may determine user requirements and user preferences corresponding to the one or more assets. Further, the asset lifecycle management module 214 may determine, but not limited to, an operational history, an operational behaviour, a supply chain information, compliance records, a geographic information, a maintenance history, and the like, associated with the one or more assets 104. Furthermore, the asset lifecycle management module 214 may correlate the determined user requirements and the user preferences with the determined operational history, the operational behaviour, the supply chain information, the compliance records, and the maintenance history. Additionally, the asset lifecycle management module 214 may generate one or more questionnaires for predicting a performance of the one or more assets 104 based on the correlation. Further, the asset lifecycle management module 214 may generate the LLM prompt corresponding to the obtained input dataset based on the generated one or more questionnaires.

For example, the process begins by determining user requirements and user preferences related to the assets. These may include specific operational expectations, performance thresholds, preferred maintenance schedules, and regulatory considerations. For instance, in an industrial setting, user requirements may specify optimal machine output, while user preferences could prioritise energy efficiency and minimal downtime. Subsequently, the asset lifecycle management module 214 may gather extensive contextual information, including the operational history, operational behaviour, supply chain information, compliance records, geographic information, and maintenance history of the assets. Operational history encompasses past performance data, while operational behaviour captures real-time and predictive patterns, such as equipment usage cycles or degradation rates. Supply chain information involves data on material sourcing and delivery schedules, while compliance records pertain to regulatory adherence. Geographic information reflects location-specific factors, such as environmental conditions, and maintenance history tracks previous repairs, inspections, and service intervals.

The asset lifecycle management module 214 then correlates the user requirements and preferences with the gathered contextual information. This correlation identifies patterns and dependencies between expectations of the user and historical and operational characteristics of the assets 104. For example, in a manufacturing plant, if user preferences prioritise reducing machine downtime, the asset lifecycle management module 214 may correlate this with maintenance logs to identify components prone to frequent failure. Similarly, in a power grid, the asset lifecycle management module 214 may link compliance requirements with geographic data to ensure assets meet region-specific environmental regulations.

Based on these correlations, the asset lifecycle management module 214 may generate one or more questionnaires aimed at predicting a future performance of the assets 104. These questionnaires are designed to gather additional information or validate assumptions about the behaviour of the assets 104. For example, in the aerospace domain, the questionnaire might inquire about operational load patterns to assess engine wear. In telecommunications, it might request information on environmental factors to predict antenna degradation.

Using the generated questionnaires, the asset lifecycle management module 214 may construct the LLM prompt. This prompt synthesises all relevant data, ensuring the large language model can provide precise, contextualised outputs. For instance, in a renewable energy system, the prompt may include details about past turbine performance, environmental conditions, and compliance needs to predict future energy output. In logistics, the prompt might contain supply chain delays and maintenance records to optimise vehicle routing. By systematically integrating user inputs, asset-specific data, and contextual correlations, the asset lifecycle management module 214 generates a refined LLM prompt. This prompt enables the large language model to deliver tailored insights and predictive recommendations across various domains, enhancing asset efficiency, compliance, and operational decision-making.

In an exemplary embodiment, the asset lifecycle management module 214 may validate the generated LLM response based on the determined user requirements, the user preferences, the determined operational history, the operational behaviour, the supply chain information, the compliance records, and the maintenance history. Further, the asset lifecycle management module 214 may generate a performance score for the validated LLM response based on results of validation. The performance score indicates a performance level of the one or more assets during the subsequent lifecycle. Further, the asset lifecycle management module 214 may predict a performance of the one or more assets in the subsequent lifecycle based on the generated performance score.

For example, the validation process ensures that the LLM response aligns with the actual conditions and expectations associated with the assets 104. For instance, in a manufacturing system, if the LLM response suggests increasing machine output, the asset lifecycle management module 214 may verify whether this recommendation is feasible by cross-referencing past operational limits, maintenance schedules, and user-defined efficiency goals. Following the validation process, the asset lifecycle management module 214 may generate a performance score for the LLM response. This score quantifies how well the asset is expected to perform during the subsequent lifecycle based on the validation results. The performance score is calculated by assessing the degree of alignment between the LLM response and historical data, operational patterns, and compliance requirements. For example, in the aerospace industry, if the LLM response recommends extending maintenance intervals for aircraft components, the performance score may reflect the likelihood of successful implementation without compromising safety or regulatory compliance. A higher score indicates that the recommendation is both practical and beneficial, while a lower score suggests potential risks or misalignment.

The asset lifecycle management module 214 uses this performance score to predict the performance of the asset 104 in its subsequent lifecycle. This prediction provides insights into future operational efficiency, maintenance needs, and compliance adherence. For instance, in renewable energy systems, a high-performance score following LLM validation might indicate that suggested turbine adjustments will improve power output and reduce downtime. Conversely, in logistics, a lower performance score may signal that the recommendation of the LLM for route optimization could increase vehicle wear or disrupt supply chain timelines. This validation and scoring mechanism enable the asset lifecycle management module 214 to generate accurate, data-driven predictions that inform decision-making and strategic planning.

For example, in a telecommunications network, the asset lifecycle management module 214 may predict signal stability based on environmental and operational parameters, while in industrial automation, it may forecast equipment degradation patterns to optimise preventive maintenance. This approach ensures that the outputs of the LLM are both technically sound and aligned with real-world operational demands, enhancing asset reliability and lifecycle efficiency across diverse domains.

In an exemplary embodiment, for validating the generated LLM response, the asset lifecycle management module 214 may simulate the one or more assets 104 in the subsequent lifecycle within a virtual environment based on the determined user requirements, the user preferences, the determined operational history, the operational behaviour, the supply chain information, the compliance records, the maintenance history, and the like. Further, the asset lifecycle management module 214 may determine a desired health state of the one or more assets 104, and the one or more actions to be performed on the one or more assets 104 before usage of the one or more assets in the subsequent life cycle based on results of simulation.

The simulation process involves modelling asset interactions with their operational environment to predict potential outcomes and identify deviations from expected performance. For example, in the aerospace industry, the asset lifecycle management module 214 may simulate engine performance across varying altitudes and operational loads to validate whether a recommended maintenance schedule of the LLM may maintain safe operating conditions. Similarly, in industrial automation, the asset lifecycle management module 214 may simulate how a proposed adjustment to machine calibration affects output quality and equipment wear over time.

Based on the simulation results, the asset lifecycle management module 214 determines the desired health state of the assets for the subsequent lifecycle. The health state represents the optimal physical and functional condition the assets must maintain to meet operational and regulatory requirements. For instance, in a renewable energy system, the desired health state may involve ensuring wind turbines operate at peak efficiency while maintaining structural integrity under different weather conditions. In telecommunications, it could mean ensuring signal transmission remains stable despite environmental factors and equipment aging.

Additionally, the asset lifecycle management module 214 identifies the specific actions required to achieve and maintain this desired health state before the assets 104 enter the next lifecycle. These actions may include preventive maintenance, component replacements, software updates, or adjustments to operational processes. By combining simulation with data analysis, the asset lifecycle management module 214 enables accurate validation of recommendations of the LLM. This approach helps ensure assets 104 are prepared for future operational cycles, reduces the risk of unexpected failures, and enhances overall efficiency and compliance across various industries.

In an embodiment, for simulating the one or more assets 104 in the subsequent lifecycle, the asset lifecycle management module 214 may predict one or more subsequent life cycle scenarios for the one or more assets 104 based on the generated LLM response. The one or more subsequent life cycle scenarios comprises one or more operational and geographic conditions for the one or more assets 104. Further, the asset lifecycle management module 214 may generate one or more simulation models corresponding to the predicted one or more subsequent life cycle scenarios. Furthermore, the asset lifecycle management module 214 may simulate the one or more assets in the subsequent lifecycle based on the generated one or more simulation models.

The scenarios encompass various operational and geographic conditions that the assets 104 may encounter in future cycles. Operational conditions include factors such as load variations, usage frequency, environmental stresses, and system interactions, while geographic conditions consider location-specific variables such as climate, altitude, and regulatory requirements. By accounting for these diverse conditions, the asset lifecycle management module 214 may ensure a comprehensive evaluation of the future performance of the asset 104. To implement these predictions, the asset lifecycle management module 214 generates simulation models corresponding to the predicted lifecycle scenarios. Each simulation model is a digital representation of the behaviour of the asset 104 under specific conditions, constructed using historical data, real-time operational parameters, and the LLM-generated recommendations. For example, in an industrial context, the asset lifecycle management module 214 may create simulation models reflecting high-load operations, temperature fluctuations, and varying maintenance schedules. In the aerospace industry, simulation models may account for different flight paths, atmospheric conditions, and mechanical wear over time. These models provide a virtual environment where the asset lifecycle management module 214 may test the impact of different scenarios on asset performance and reliability.

Using these simulation models, the asset lifecycle management module 214 conducts virtual simulations to analyse how the assets would perform under the predicted lifecycle scenarios. This process allows the asset lifecycle management module 214 to identify potential issues, validate the feasibility of the recommendations of the LLM, and determine the future operational state of the asset 104. For instance, in a renewable energy system, the asset lifecycle management module 214 may simulate how solar panel performance changes with seasonal weather patterns and dust accumulation. In telecommunications, the asset lifecycle management module 214 may model how environmental factors such as wind and temperature affect signal quality and infrastructure integrity over time.

Through this simulation process, the asset lifecycle management module 214 provides valuable insights into asset behaviour, enabling proactive maintenance planning and performance optimization. By evaluating the assets across multiple scenarios, the asset lifecycle management module 214 may identify the most effective actions to maintain or improve health and operational efficiency of the assets 104. This predictive approach supports informed decision-making, reduces unplanned downtime, and ensures compliance with industry standards across a range of domains.

In an embodiment, for generating the LLM response corresponding to the generated LLM prompt, the asset lifecycle management module 214 may determine a type of the one or more assets to be used in the subsequent life cycle. Further, the asset lifecycle management module 214 may determine a LLM model corresponding to the determined type of the one or more assets. Furthermore, the asset lifecycle management module 214 may validate whether the determined one or more operational state, the material state, the environmental state and the compliance state is applicable to the determined type of the one or more assets, by applying the determined one or more operational state, the material state, the environmental state and the compliance state to the determined LLM model. Furthermore, the asset lifecycle management module 214 may generate the plurality of recommendations corresponding to the current performance of the one or more assets, the health state of the one or more assets based on results of validation. The classification identifies the category and function of the asset 104, such as industrial machinery, electronic devices, or transportation equipment. For instance, in a manufacturing environment, the asset type could refer to a robotic arm or a conveyor system, while in the energy sector, it might refer to wind turbines or solar panels. Accurately identifying the asset type is critical because different asset categories require distinct operational, material, environmental, and compliance considerations.

Once the asset type is identified, the asset lifecycle management module 214 selects a corresponding LLM model tailored to that asset type. Different LLM models are specialised for particular domains and asset categories, ensuring that the generated recommendations are contextually appropriate.

The asset lifecycle management module 214 then validates the applicability of the determined operational state, material state, environmental state, and compliance state to the identified asset type. This validation involves applying these parameters to the selected LLM model to assess whether they align with the characteristics and operating conditions of the asset. For instance, in the aerospace domain, the system would verify whether an operational state of the engine meets safety standards under high-altitude conditions. Similarly, for a telecommunications network, it would check if environmental parameters, such as temperature variations, are within acceptable limits for the infrastructure.

Based on the results of this validation, the asset lifecycle management module 214 generates a plurality of recommendations related to the current performance and health state of the assets 104. These recommendations provide actionable insights to optimise asset performance, maintain compliance, and ensure operational reliability. For example, in the logistics industry, the asset lifecycle management module 214 may suggest recalibrating vehicle sensors to improve delivery accuracy. In industrial automation, the asset lifecycle management module 214 may recommend specific maintenance tasks to prevent wear-related failures. In a power plant, the asset lifecycle management module 214 may propose adjusting operational cycles to enhance energy output while complying with environmental regulations. By systematically aligning asset-specific parameters with the appropriate LLM model and validating their relevance, the asset lifecycle management module 214 ensures that the generated recommendations are both accurate and actionable. This process facilitates informed decision-making, reduces operational risks, and enhances the longevity and efficiency of assets across diverse industries.

In an exemplary embodiment, the asset lifecycle management module 214 may generate one or more actions to be performed on the one or more assets 104 before usage of the one or more assets 104 in the subsequent life cycle based on the generated plurality of recommendations. Further, the asset lifecycle management module 214 may generate the LLM response corresponding to the generated LLM prompt based on the generated plurality of recommendations and the generated one or more actions to be performed on the one or more assets before usage of the one or more assets in the subsequent life cycle. For example, the actions are derived from the previously generated plurality of recommendations and are intended to optimise asset readiness, ensure compliance, and maintain operational efficiency. The actions may include preventive maintenance tasks, component replacements, software updates, environmental adjustments, or operational changes necessary to prepare the assets for future use.

Once the necessary actions are identified, the asset lifecycle management module 214 generates the LLM response corresponding to the generated LLM prompt. This response integrates both the plurality of recommendations and the specific actions to be performed, offering a comprehensive set of instructions and insights for asset preparation. The LLM response serves as a detailed guide to implement necessary interventions before the assets transition into their subsequent lifecycle. For instance, in the transportation industry, the response may outline the replacement of critical vehicle components and adjustments to operating parameters to ensure safety and compliance. In industrial automation, the response might propose updating firmware and conducting diagnostic tests to detect latent faults.

By combining actionable steps with high-level recommendations, the asset lifecycle management module 214 provides a holistic approach to the asset lifecycle management. This integrated response enables stakeholders to execute pre-emptive measures, reduce operational risks, and improve asset longevity. The comprehensive nature of the LLM response ensures that all relevant factors-ranging from operational and environmental conditions to compliance requirements-are considered, enhancing the overall efficiency and reliability of the assets across diverse industries.

In an embodiment, for generating the one or more actions to be performed on the one or more assets 104 before usage of the one or more assets 104 in the subsequent life cycle based on the generated plurality of recommendations, the asset lifecycle management module 214 may determine a stage of the subsequent life cycle within which the one or more assets 104 are to be used. Further, the asset lifecycle management module 214 may determine a set of operational tests to be executed for the one or more assets 104 before usage of the one or more assets 104 in the subsequent life cycle based on the determined stage. Furthermore, the asset lifecycle management module 214 may generate one or more reasons for executing the determined set of operational tests using explainable AI models. The initial stage represents a specific phase in the operational progression of the asset, such as deployment, active use, maintenance, or decommissioning. Identifying the lifecycle stage allows the asset lifecycle management module 214 may to tailor actions based on the expected functions and conditions of the asset 104 during that period. For instance, in the manufacturing domain, if the asset 104 is entering a high-intensity production phase, the asset lifecycle management module 214 may prioritise performance optimization and wear analysis. In the transportation sector, if the asset is approaching long-haul usage, the asset lifecycle management module 214 may focus on safety checks and fuel efficiency enhancements.

After determining the lifecycle stage, the asset lifecycle management module 214 identifies a set of operational tests to be performed on the assets 104 before their subsequent use. These tests are designed to verify that the assets meet operational, safety, and performance standards under anticipated conditions.

Furthermore, the asset lifecycle management module 214 generates one or more reasons for executing the identified operational tests using explainable AI models. These models provide transparent and interpretable explanations for why specific tests are necessary, enhancing user understanding and decision-making. For instance, if a mechanical component undergoes fatigue analysis, the explainable AI model may highlight that the component is subject to repeated stress cycles and is at risk of structural failure. In the telecommunications field, if environmental stress tests are recommended, the AI model may explain that these tests are crucial due to the deployment of the asset in regions with extreme temperature fluctuations. This interpretability helps users comprehend the rationale behind each action, ensuring informed implementation.

By combining lifecycle stage identification, operational test determination, and explainable AI-driven reasoning, the asset lifecycle management module 214 facilitates a comprehensive and transparent approach to asset preparation. This method enables organizations to execute targeted actions that align with the future operational demands, minimise risks, and maintain compliance of the asset across diverse industries.

In another exemplary embodiment, the asset lifecycle management module 214 may obtain user feedback corresponding to the generated LLM response at a real-time. The user feedback indicates one or more errors associated with the generated LLM response. Further, the asset lifecycle management module 214 may tune the generated LLM prompt based on the obtained user feedback. The tuned LLM prompt comprises updated set of questionnaires based on the user feedback. Furthermore, the asset lifecycle management module 214 may update the LLM response based on the tuned LLM prompt. The user feedback serves as a critical input to identify and address any errors or inaccuracies present in the LLM response. Errors may include incorrect recommendations, misaligned actions, or incomplete information that does not accurately reflect the operational, material, environmental, or compliance states of the asset 104. For instance, in the industrial sector, a user may provide feedback if the LLM response incorrectly suggests maintenance for a component that has already been replaced. In the energy sector, feedback could highlight discrepancies in environmental parameters if the LLM response does not account for recent climate variations affecting asset performance.

Upon receiving the user feedback, the asset lifecycle management module 214 tunes the generated LLM prompt to reflect the identified errors and necessary adjustments. This tuning process involves modifying the structure of the LLM prompt and content by incorporating an updated set of questionnaires derived from the feedback of the user. The updated questionnaires target specific aspects of the lifecycle of the asset that require further clarification or correction. For example, if feedback from the manufacturing sector indicates inaccurate operational state assessments, the tuned LLM prompt may include new questions focusing on recent operational anomalies or unrecorded maintenance activities. In the logistics domain, if errors arise from supply chain assumptions, the asset lifecycle management module 214 may adjust the prompt to query real-time inventory data and transportation schedules.

Based on the tuned LLM prompt, the asset lifecycle management module 214 subsequently updates the LLM response to correct any inaccuracies and provide more precise recommendations. This updated LLM response reflects a refined understanding of the conditions of the asset 104, aligning with user inputs and operational realities. For instance, in the telecommunications industry, if the original response overlooked hardware degradation due to prolonged use, the updated LLM response may include new preventive actions such as replacing aged components. In the aerospace industry, if compliance requirements were initially misinterpreted, the revised response might outline specific inspection protocols aligned with updated regulatory standards. By integrating real-time user feedback, tuning the LLM prompt, and updating the LLM response accordingly, the asset lifecycle management module 214 ensures continuous improvement in accuracy and relevance. This adaptive mechanism enhances decision-making, reduces the likelihood of errors, and supports dynamic asset management across various industries by aligning LLM outputs with evolving operational contexts and user insights.

In an exemplary embodiment, the asset lifecycle management module 214 may generate one or more artificial intelligence (AI) driven insights corresponding to a behaviour and a performance of the one or more assets based on the generated LLM response. The one or more AI-driven insights comprises, but not limited to, one or more predictive alerts corresponding to potential degradation risks of the one or more assets, potential gaps and abnormalities in the behaviour and the performance of the one or more assets, a reuse feedback, a recovery feedback, a recycling feedback for the one or more assets, and the like.

Predictive alerts are generated by analysing historical data, operational patterns, and environmental factors to identify early indicators of potential degradation risks. For example, in the manufacturing sector, the asset lifecycle management module 214 may predict mechanical wear and tear based on vibration and temperature anomalies, prompting preventive maintenance. In the energy sector, predictive alerts could warn of potential performance degradation in wind turbines due to changing wind patterns and increasing mechanical stress. These alerts enable proactive interventions to prevent unexpected failures and minimise downtime. The asset lifecycle management module 214 may also identifies potential gaps and abnormalities in asset behaviour performance by continuously monitoring and analysing real-time data. For instance, in the automotive industry, if a vehicle exhibits irregular fuel consumption or temperature fluctuations, the system may flag these as deviations from expected performance. In industrial automation, abnormal patterns in sensor readings may indicate system malfunctions or misalignments, prompting further investigation. This insight allows for early detection of performance issues, ensuring consistent and optimal asset operation.

Additionally, the asset lifecycle management module 214 provides feedback for reuse, recovery, and recycling to support sustainable asset management. Reuse feedback may suggest refurbishing or repurposing components that remain functional beyond their primary lifecycle. For example, in the electronics industry, reusable circuit boards and batteries could be redirected to secondary applications. Recovery feedback identifies salvageable materials from decommissioned assets, such as extracting valuable metals from outdated telecommunications equipment. Recycling feedback outlines methods to process and reintegrate materials, promoting resource efficiency. By utilising AI-driven insights, the asset lifecycle management module 214 facilitates comprehensive asset monitoring and lifecycle optimization. These insights empower stakeholders to anticipate risks, maintain asset integrity, and implement sustainable practices across diverse industries. This approach not only enhances operational resilience and cost efficiency but also aligns with environmental and regulatory standards by promoting responsible resource utilization.

The input-output unit 210 may include input devices a keypad, touch-sensitive display, camera (such as a camera receiving gesture-based inputs), and the like, capable of receiving one or more input signals, such as user commands to process equipment data. Also, the input-output unit 210 may be a display unit for displaying a graphical user interface which visualises the multimodal data and also displays the status information associated with each set of actions performed on the multimodal data. The set of actions may include data entry, data modification or data display. The bus 212 acts as interconnect between the processor 202, the memory 204, and the input-output unit 210.

Those of ordinary skilled in the art will appreciate that the hardware depicted in FIG. 2 may vary for particular implementations. For example, other peripheral devices such as an optical disk drive and the like, Local Area Network (LAN), Wide Area Network (WAN), Wireless (e.g., Wi-Fi) adapter, graphics adapter, disk controller, input/output (I/O) adapter also may be used in addition or in place of the hardware depicted. The depicted example is provided for the purpose of explanation only and is not meant to imply architectural limitations with respect to the present disclosure.

Those skilled in the art will recognise that, for simplicity and clarity, the full structure and operation of all data processing systems suitable for use with the present disclosure is not being depicted or described herein. Instead, only so much of a computing system 102 as is unique to the present disclosure or necessary for an understanding of the present disclosure is depicted and described. The remainder of the construction and operation of the computing system 102 may conform to any of the various current implementation and practices known in the art.

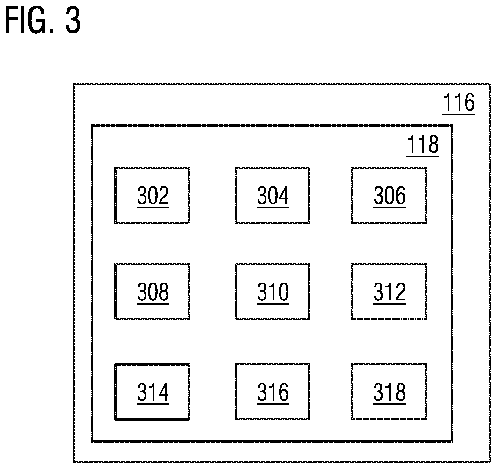

FIG. 3 is a block diagram of an asset lifecycle management module 214, such as those shown in FIGs. 1 and 2, capable of asset lifecycle management for recurring usage of assets enabling circular economy, according to the embodiment of the present invention. The computer/computer-simulated environment 118 may include at least one of a computing environment, a metaverse environment, a virtual environment, an augment environment, a computing environment, a 3D environment, a point cloud environment, and the like.

In FIG. 3, the asset lifecycle management module 214 comprises a data receiving module 302, a parameter determining module 304, a semantic graph generating module 306, a context determining module 308, an entity extracting module 310, a prompt generating module 312, a state determining module 314, a response generating module 316, a data outputting module 318.

In an exemplary embodiment, the data receiving module 302 may obtain an input dataset associated with one or more assets 104 in the technical installation 120 from the plurality of data sources. Further, the parameter determining module 304 may determine multidimensional contextual parameters associated with the one or more assets 104 based on the obtained input dataset. The multidimensional contextual parameters comprise, but not limited to, operational parameters, material parameters, environmental parameters, legal and compliance parameters, and the like. Furthermore, the semantic graph generating module 306 may generate a semantic graph of the input dataset based on the determined the multidimensional contextual parameters. The semantic graph comprises the multidimensional contextual parameters represented as semantically correlated entities. Additionally, the context determining module 308 may determine a context of the obtained input dataset by identifying latent relationships between the determined multidimensional contextual parameters in the generated graphical representation.

Further, the entity extracting module 310 may extract one or more entities from the generated graphical representation based on the determined context. Furthermore, the prompt generating module 312 may generate an LLM prompt corresponding to the obtained input dataset based on the extracted one or more entities. Additionally, the state determining module 314 may determine one or more operational state, material state, environmental state and compliance state associated with the one or more assets based on the generated LLM prompt. Further, the response generating module 316 may generate an LLM response corresponding to the generated LLM prompt by applying the determined one or more operational state, the material state, the environmental state, and the compliance state to a corresponding LLM model. The LLM response comprises, but not limited to, a plurality of recommendations corresponding to recurring usage of the one or more assets, current performance of the one or more assets, health state of the one or more assets, and one or more actions to be performed on the one or more assets before usage of the one or more assets in a subsequent life cycle. Additionally, the data outputting module 318 may output the generated LLM response on a user interface of a user device such as the electronic device 108.

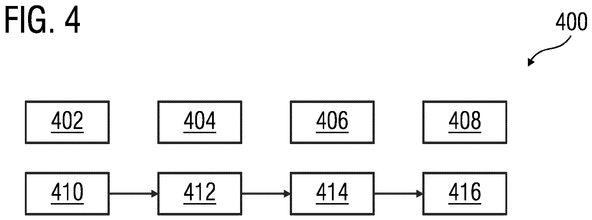

FIG. 4 is a flow diagram depicting an exemplary method 400 of generating response recommendation based on contextual insights, by extracting comprehensive knowledge to generate a prompt for a Generative AI (GenAI) model, according to an embodiment of the present invention. In an example, the method 400 includes extracting knowledge regrading a product and providing actionable recommendations for managing the circularity of its components and materials via a digital assistant to assist stakeholders. The method includes integrating relevant sources of information into a unified knowledge graph. The knowledge graph serves as a comprehensive repository, encompassing data such as the bill of materials (BoM), operational behaviour, supply chain dynamics, compliance requirements, and other relevant aspects.

The knowledge graph functions as a centralised source of information to generate precise recommendations on how to manage a component or its materials for circularity. This is achieved by analysing the interconnections of the component or material across multiple dimensions, including behavioural patterns, engineering specifications, supplier relationships, geographic considerations, and compliance obligations. By utilising these multidimensional relationships, the system 102 may capture the contextual richness necessary to frame a well-informed prompt.

This contextual prompt is then submitted to an appropriate Large Language Model (LLM) to generate detailed recommendations. These recommendations outline the specific actions required to facilitate the circularity of the component or material, while also assessing the potential impact on its subsequent lifecycle and performance. The integration of comprehensive data sources with advanced AI capabilities enables the digital assistant to provide precise, context-aware guidance for sustainable and efficient asset management.

The method 400 depicts a structured process through which comprehensive knowledge from various domains is transformed into actionable system responses using a Generative AI (GenAI) model. This process is divided into four major stages such as a comprehensive knowledge integration 402, a contextual knowledge extraction 404, a prompt generation for the Large Language Model (LLM) 406, and a generation of system responses as specific recommendations 408. Each stage systematically extracts, contextualises, and processes data, ensuring accurate, dynamic, and operationally relevant outputs.

In the first stage of the comprehensive knowledge integration 402, at step 410, the method 400 includes collecting, by the processor 112, comprehensive knowledge from multiple disparate data sources and integrated into a standardised semantic representation. This integration enables the computing system 102 to harmonise diverse information formats into a unified model. For example, categories of knowledge include, but are not limited to, inventory management, logistics management, material properties, product composition, circularity methods, applicable industry, operational behaviour, policy and compliance, and geographic region, and the like, and combinations thereof. For instance, inventory management covers tracking stock levels and spare parts, while logistics management involves planning and controlling the material flow.

Material properties capture characteristics such as tensile strength and thermal conductivity, which are critical in predicting asset behaviour under specific conditions. This unified knowledge forms a "single source of knowledge", which serves as the foundation for further processing and analysis.

In the second stage of the contextual knowledge extraction 404, at step 412, the method 400 includes extracting, by the processor 112, contextual knowledge from the integrated data, focusing on a one or more dimensions such as a product, a component, a material, a property, a compliance, a geography, an engineering, operations, a maintenance, and the like. The dimensions capture a holistic view of asset characteristics and performance. For example, the "product" dimension refers to the entire asset and its specifications, while the "component" dimension details its constituent parts. Material and property dimensions provide insights into the physical and mechanical characteristics of the asset, which are crucial for understanding its durability. Compliance dimension ensures adherence to regulatory standards such as international organization for standardization (ISO) guidelines, while the geographic context captures environmental factors affecting the performance of the asset. The engineering dimension involves design and technical analysis, while operations and maintenance capture real-time functionality and historical repair data. This contextual knowledge is crucial for generating prompts that guide the AI model in delivering targeted responses.

In the third stage of the prompt generation for the Large Language Model (LLM) 406, at step 414, the method 400 includes generating, by the processor 212, a structured LLM prompt, using the contextual knowledge. This prompt is designed to extract precise, operationally relevant insights from the AI model. For instance, if the system 102 detects potential degradation risks in a wind turbine operating in a coastal region, the prompt might request recommendations on optimising material composition to improve corrosion resistance. The prompt may also inquire about necessary maintenance actions to ensure continued compliance with industry standards. By generating prompts tailored to specific asset characteristics, operational behaviours, and environmental contexts, the system ensures that the AI model provides accurate and meaningful responses.

In the final stage of the generation of system responses as specific recommendations 408, at step 416, the method 400 comprises generating, by the processor 112, one or more LLM responses in the form of actionable recommendations, by processing the LLM prompt through the Generative AI model. These recommendations address one or more concerns such as material optimization, operational adjustments, recycling strategies, and geographic-specific interventions. For instance, the system might suggest creating a polymer composite with enhanced tensile strength to prevent fatigue in high-load environments. The recommendations also include adopting advanced corrosion-resistant coatings for turbines in coastal regions or developing hybrid materials combining bio-based and synthetic components to reduce carbon footprint of the product. Additionally, the system 102 may provide guidelines for implementing vibration monitoring algorithms to detect early-stage mechanical faults, thereby enhancing predictive maintenance capabilities.

The LLM responses are dynamic and iterative, allowing continuous improvement based on user feedback and real-time operational data. If errors or gaps are identified in the recommendations of the AI, the asset lifecycle management module 214 may refine the LLM prompt and update the outputs of the system 102 accordingly. This closed-loop process ensures that the AI-driven insights evolve with changing operational conditions and emerging knowledge. By integrating comprehensive knowledge with advanced AI modelling, the system 102 provides a robust framework for managing the lifecycle of complex assets, optimising performance, ensuring compliance, and supporting sustainability objectives.

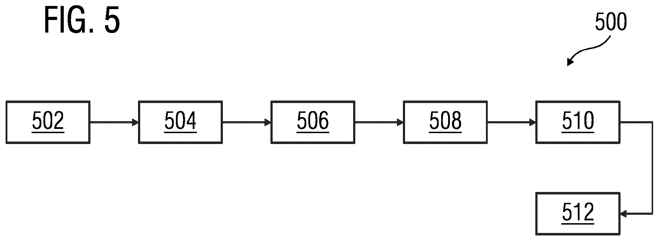

FIG. 5 is a flow diagram depicting an exemplary method 500 of interaction with a knowledge graph and subsequently with one or more large language models (LLMs), according to the embodiment of the present invention. Consider, a digital assistant utilises a knowledge graph (KG) and a large language model (LLM) to provide context-aware recommendations. At step 502, the method 500 includes identifying, by the processor 112, a user context, by capturing the user context from either a native application (such as a dedicated software platform) or an explicit question. This step involves understanding the intent of user or the nature of the query. For example, if a stakeholder asks how to recycle a specific component, the system 102 interprets this input to begin the information retrieval process.

At step 504, the method 500 includes localising, by the processor 112, context in the knowledge graph (KG), where the system 102 breaks down the captured context and maps the captured context to entities within the knowledge graph (KG). Localization involves identifying and associating the query of the user with relevant concepts in the KG. For instance, if the query pertains to the circularity of a plastic component, the system 102 locates the corresponding material and operational data in the graph. Techniques such as entity disambiguation, which resolves ambiguities in user input, are applied to pinpoint the correct references.

At step 506, the method 500 includes identifying and retrieving, by the processor 112, relevant information from a KG neighbourhood from context, by determining the neighbourhood of the localised entity. This neighbourhood refers to connected nodes that provide additional insights related to the initial query. For example, if the system 102 localises a plastic part, the system 103 may query related nodes such as manufacturing processes, suppliers, compliance data, and performance history. This process uses for example, a simple protocol and resource description framework (RDF) query language (SPARQL) (i.e., a query language for databases structured as RDF graphs) to retrieve interconnected information efficiently.

At step 508, the method 500 includes extracting, by the processor 112, content from response. This step involves receiving and processing the results of the SPARQL query. The system 102 parses these results to extract relevant entities and relationships, preparing the information in a structured format suitable for generating a prompt. For instance, if the query returns information on degradation risks and regulatory requirements, this data is organised to craft a comprehensive input for the LLM.

At step 510, the method 500 includes generating, by the processor 112, a LLM prompt to query the LLM. Once the content is extracted, the query LLM with prompt step involves issuing a structured prompt to a Large Language Model. The LLM, trained on vast textual datasets, processes the prompt, and generates a context-aware response. For example, if the prompt involves determining maintenance actions for a recyclable metal component, the LLM might suggest specific treatment methods, inspection schedules, and regulatory checks.

At step 512, the method 500 includes extracting, by the processor 112, actionable insights from the LLM response. Finally, in the process LLM Response step, the system 102 interprets the LLM output and extracts actionable insights to present to the user. This may include concrete recommendations, such as how to recycle or reuse a part, anticipated performance in subsequent lifecycles, or potential compliance challenges. For instance, if the LLM identifies that a component is suitable for remanufacturing but requires thermal treatment, this insight is provided as a recommendation.

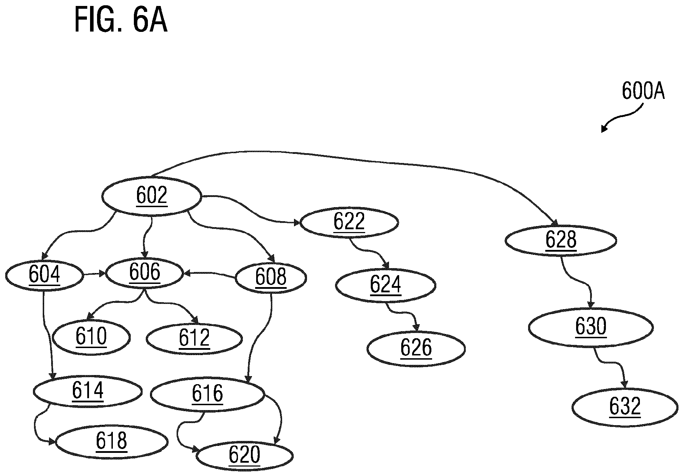

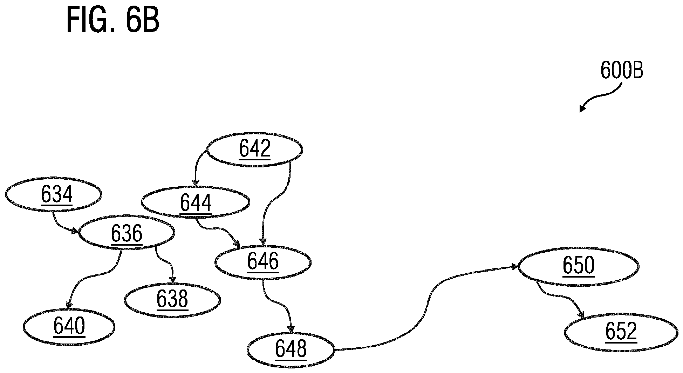

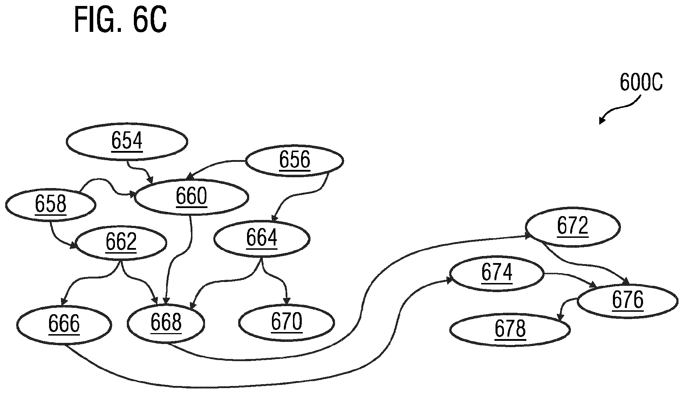

FIG. 6A is a schematic diagram depicting an exemplary method 600A of generating one or more prompts and LLM response for an exemplary scenario of a process industry to evaluate a structural and thermal performance of a component, according to the embodiment of the present invention. FIG. 6A depicts a process/method 600A where a structured knowledge representation, in the form of a knowledge graph, is used to generate actionable recommendations through a Large Language Model (LLM). Two sections in FIG. 6 include a "Prompt Input" and "LLM Response" sections, illustrating how the system 102 extracts and organises contextual information to produce specific, actionable insights for asset lifecycle management.

In the "prompt input" section, FIG. 6A shows a hierarchical structure that represents a knowledge graph. The knowledge graph integrates various aspects of a lifecycle of the asset, including operational conditions, material properties, and environmental factors. The graph branches out into categories such as "routing", "value", and "process history", which contain further subcategories. The knowledge graph includes a bearing 602, a ball 604, a steel 606, a ring 608, a reuse 610, a recover 612, an operation-1 614, an operation-2 616, a structural 618, a thermal 620, a motor 622, a pump 624, a process industry 626, a motor 628, a conveyer belt 630, and a mining industry 632.

For example, "bearing" includes nodes such as "thermal", "operational", and "material", each representing a distinct characteristic that affects the performance of the asset 104. At the bottom of the graph, the "current" node from 602 to 626 indicates the present operational state, while the "target" node from 628 to 630, represents the desired future condition or operational goal. This structured representation allows the system 102 to gather and interpret complex contextual relationships effectively, ensuring that the prompts sent to the LLM capture a comprehensive view of the condition of the asset 104.

The knowledge graph serves as the basis for formulating prompts by connecting various parameters related to the asset. Each node represents a specific attribute or characteristic, while the edges between nodes capture relationships and dependencies. By organising the nodes or elements, the system 102 may dynamically generate prompts that reflect the operational context of the asset 104, ensuring that the LLM receives detailed and relevant information for analysis.

In the LLM response section, the system 102 translates the structured prompt into specific recommendations through the LLM. Each recommendation provides actionable steps for assessing or improving the performance of the asset 104 and maintaining its operational integrity. For example, the LLM response such as a "vibrational test for varying loads" suggests performing vibration analysis to evaluate the mechanical stability of the asset 104 under different load conditions. The "lubrication test for dusty conditions" recommends assessing lubrication performance to ensure efficient operation in environments with high levels of particulate contamination. The "ultrasound for detecting potential cracks" output advises using ultrasonic inspection techniques to identify internal or surface-level cracks that may affect structural integrity. The "thermal simulation for varying external temperature" suggests conducting thermal modelling to predict how the asset responds to changing environmental temperatures, ensuring operational reliability. Lastly, the "material test for corrosion/abrasion" recommends assessing the resistance of the material to wear and corrosion to maintain long-term durability.

Consider a scenario involving a bearing 602 within a motor 622 that drives a pump in a process industry. When the motor 622 reaches the end of its operational life, a decision must be made regarding the potential for the bearing 602 to be reused or to recover materials from. In such cases, the Bill of Materials (BoM) for the bearing 602 and its associated operational parameters are gathered to establish a comprehensive contextual understanding of the component. For instance, the ring 608 of the bearing 602 is composed of steel and is characterised by structural and thermal performance considerations in the operational environment of the motor 622, driving the pump 624 within the process industry. This contextual information forms the basis for generating a prompt to evaluate the necessary tests required to assess the suitability of the bearing for further use.

Additionally, if the bearing 602 is intended for reuse in a different operational context-such as a motor 622 driving a conveyor belt 630 in the mining industry-the prompt must reflect these new performance and environmental requirements. This expanded context facilitates the formulation of an appropriate testing plan that addresses the ability of the bearing to meet the demands of a second-life application.

In response to such a prompt, the system 102 provides stakeholders with detailed guidance on the types of tests required and the associated planning necessary to validate the fitness of the bearing 602 for reuse. This test plan may include procedures such as using vibration test rigs to evaluate mechanical stability, employing ultrasound technology to detect internal or surface cracks, assessing lubrication capabilities under different environmental conditions, and verifying the ability of the bearing 602 to withstand dynamic loading scenarios specific to the mining industry. Hence, the system 102 enables informed decision-making regarding the reuse or material recovery of components, ensuring they meet the performance criteria for their intended second-life application.

FIG. 6B is a flow diagram depicting an exemplary method 600B of evaluating component testing from a materials management perspective, according to the embodiment of the present invention. The method 600B includes evaluating the potential reuse or recycling of materials from a current component for a target application. FIG. 6B is divided into two primary sections, such as a "current" state, which captures the material composition and functional properties of an existing component, and the "target" state, which defines the requirements and constraints of the intended future application. The process leverages a structured knowledge graph to contextualise the relationships between materials, their properties, and their operational environments. This contextual information is then used to generate precise recommendations through a Large Language Model (LLM) to guide stakeholders in making informed decisions regarding material reuse or recycling.

In the "current" section, the method 600B identifies specific materials and their associated properties. The materials and their associated properties include a cable 634, a copper 636, an electrical 638, a recover 640, a fastener 642, a structural 644, a plastic 646, and a recycle 648. For instance, the components such as cables 634, which contain copper 636 and plastic materials 646. These materials are categorised based on their functional characteristics, in which the copper 636 is linked to electrical properties, while plastic 646 is associated with structural integrity and recycling potential. Additionally, the knowledge graph captures whether the materials are reusable or recyclable 648. This structured information provides a comprehensive understanding of the current state of the material, serving as the foundation for assessing its suitability for future applications.

The "target" section focuses on evaluating the compatibility of the current materials for use in consumer goods 652, specifically a cap component 650. This evaluation involves analysing critical parameters to determine whether the materials can safely and effectively be repurposed. One such parameter is identifying prohibited content materials or substances that are restricted or unsafe in the target application. For example, plastic additives acceptable in industrial contexts may be unsuitable for consumer products due to safety regulations. Another parameter is the ability to be blended with target materials, which assesses whether the current materials can be integrated without compromising performance. For instance, the plastic 646 from the cable 634 must be compatible with the polymers used in the manufacturing process cap 650.

Additionally, the system 102 evaluates structural and thermal strength to determine if the material meets the mechanical and environmental demands of the target usage. For example, the plastic may need to maintain its shape and durability under typical consumer product conditions. The final parameter involves assessing the possibility of harmful degradation over time, which identifies risks related to the long-term stability of the material. Recycled plastics, for instance, may degrade and release harmful byproducts or lose their mechanical properties, posing potential safety concerns. By integrating these parameters, the system 102 forms a comprehensive framework for decision-making. The knowledge graph provides the necessary contextual information, while the LLM generates detailed, actionable insights for stakeholders. This process ensures that materials intended for reuse or recycling meet the required performance, safety, and regulatory standards in their second-life applications, facilitating informed and sustainable lifecycle management.

In the case of materials such as copper cables and plastic fasteners used in a product, it is essential to evaluate the components from a materials management perspective. This involves determining the necessary testing required to assess the feasibility of recycling these materials for new applications. For instance, it is critical to understand whether the copper 636 extracted from a cable 634 can be repurposed to manufacture copper strips for automotive applications or whether the plastic 646 from a fastener 642 can be reused to produce caps in the consumer goods industry. Such assessments are vital to ensuring the suitability of the material for a second-life application while maintaining performance and compliance standards.

To facilitate this process, a comprehensive testing plan may need to be generated to address the requirements of the intended future use of the material. This plan may account for the specific characteristics of the materials in question and their compatibility with the target application. For example, in the case of copper 636, the plan may need to evaluate its electrical conductivity, structural integrity, and potential impurities that could affect performance in automotive environments. Similarly, for plastic materials, tests might focus on mechanical strength, thermal stability, and the ability to blend with other polymers in consumer product manufacturing.

A well-structured testing plan may also consider regulatory compliance and safety standards required for the new application. This includes analysing a chemical composition of the material to ensure that no hazardous substances are present and evaluating its long-term behaviour under operational conditions. For instance, plastics intended for consumer products may need to be assessed for degradation risks, which could impact product safety over time. Furthermore, performance characteristics such as flexibility, tensile strength, and resistance to environmental stress must be thoroughly examined to ensure the material meets the operational demands of the new application. Given a prompt that outlines these considerations, the system would generate a response to guide stakeholders through the testing and planning process. This response would outline the necessary steps for evaluating the properties of the material, identifying any additional processing requirements, and ensuring compliance with industry standards.

FIG. 6C is a flow diagram depicting an exemplary method 600C of identifying applicable industry-specific and geography-specific regulatory mandates to assess compliance requirements based on both current and intended usage contexts, according to the embodiment of the present invention. The method 600C includes evaluating the reuse, recovery, and recycling of materials through a knowledge graph-driven framework. This highlights how information from the current material context is transformed into actionable testing and compliance recommendations for second-life applications. This process is achieved by connecting material properties, industrial usage, and geographic factors, ensuring a comprehensive understanding of the lifecycle of the material.

A "prompt input" section represents the current state of materials, which include items such as iron 662 and plastic 664 fasteners. These materials are categorised under broader domains such as Industry 660 and Geography 654, reflecting their origin and operational context. For effective material circularity, it is essential to gather detailed information about these components and their relationships. For example, the knowledge graph links materials to their industrial applications and geographic regions, forming a holistic dataset that can inform decisions regarding the reuse 668 or recycling 670 of materials in other contexts.

The knowledge graph connects the current material context to a target application. This contextualization involves assessing whether the materials such as iron 662 or plastic 664 can be repurposed for use in building 676 panels 672 within a new geographic region 678, or industrial environment. This process requires understanding not only the physical and chemical properties of the materials but also the regulatory and environmental constraints specific to the target application. By linking these contextual elements, the system can generate comprehensive prompts to evaluate the feasibility of material reuse while ensuring compliance with industry standards and geographic regulations.

In the "LLM response" section outlines specific tests and validations necessary to assess the suitability of these materials for their new application. Based on the contextual prompt generated from the knowledge graph, the system 102 proposes a set of critical tests and compliance checks. One such test is the degradation test for corrosive environments, which evaluates whether the material can withstand exposure to harsh conditions without compromising its structural integrity. This is particularly important when materials are reused in industrial or outdoor applications where environmental factors may accelerate wear and tear.

Another important assessment is the toxicity test for disposal if not reused, which ensures that materials meet environmental safety standards if they cannot be repurposed. This test is crucial for identifying hazardous components that could pose a risk if improperly discarded. Additionally, the system addresses industry and geography-specific rules and laws for reuse, ensuring that materials comply with legal frameworks governing their second-life applications. Different geographic regions and industries often impose specific regulations on recycled materials, making it essential to verify compliance before reuse.

Further, the system 102 suggests tests for human exposure in case of direct contact, which evaluate whether the material is safe for applications where people may come into physical contact with it. For instance, when reusing materials to produce building panels, it is necessary to ensure that they do not cause skin irritation, chemical leaching, or other health hazards. Lastly, the verification and validation of sourcing provenance is proposed to authenticate the origin of the material and compliance history. This step ensures transparency and adherence to ethical sourcing practices, which is particularly important in industries that require traceability of materials.

When implementing circularity for either a complete component or the associated materials, a crucial aspect of the testing process is ensuring compliance with relevant regulatory and industry-specific mandates. These mandates may vary based on the industry and geographic location, both for the current usage of the component and intended second-life application. Compliance with such regulations is essential to guarantee the suitability, safety, and ethical sourcing of the material.

For instance, if an iron component previously used in a corrosive environment, such as within a battery system, is being considered for reuse in a building railing 674, it is essential to verify whether the component meets the required structural and environmental standards for construction applications. Even if the component passes mechanical and structural integrity tests, additional compliance checks must be conducted to align with regulations governing building materials. Similarly, if a plastic fastener is to be reused, it is vital to ensure that the material does not originate from unethical or illegal sources, such as those involving child labour or environmentally harmful manufacturing processes. These considerations extend beyond simple material properties and require a thorough examination of the origin and lifecycle of the component.

The testability process in such cases involves interrogating the industry, geographic region, and material provenance associated with the current usage. This interrogation allows for the generation of a comprehensive response outlining the tests and verification procedures required to meet the standards of the target application. These tests may include assessments for critical applications, such as structural soundness and environmental durability, as well as guidelines for the proper disposal of materials that cannot be reused. Additionally, human safety norms may need to be evaluated, particularly when there is potential for direct human contact with the material. For example, materials intended for public infrastructure or consumer products must be tested for toxicity, allergenic properties, and degradation over time under human exposure conditions. Furthermore, the testing process may need to incorporate the verification and validation of sourcing provenance. This ensures that users in the second-life application are fully aware of the origin and previous usage of the material. Provenance verification not only ensures regulatory compliance, however, also promotes transparency and ethical accountability. This aspect is particularly important in industries where traceability is mandated, such as in construction, consumer goods, and critical infrastructure.

Hence, generating comprehensive and accurate responses relies on composing prompts with the appropriate context and the surrounding relationships of the component in question. This method ensures that all relevant factors such as material properties, operational behaviour, regulatory compliance, and potential second-life applications are considered when formulating testability guidelines.

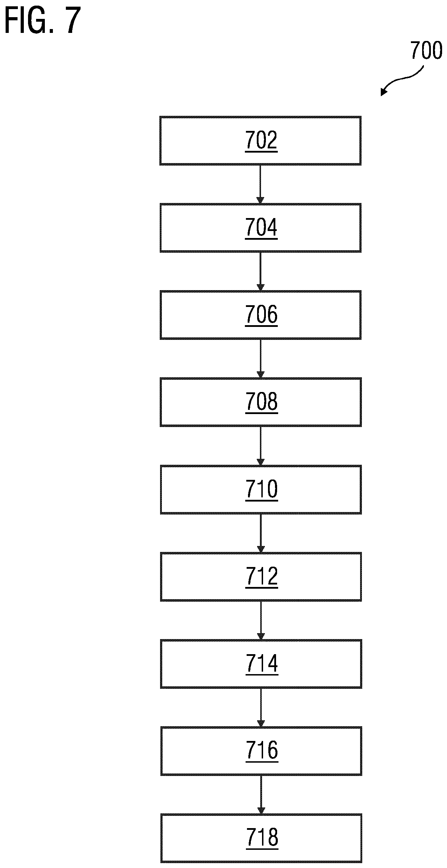

FIG. 7 is a process flowchart illustrating an exemplary method 700 of asset lifecycle management for recurring usage of assets 104 enabling circular economy, according to the embodiment of the present invention.

At step 702, the method 700 may include obtaining, by the processor 202, an input dataset associated with one or more assets 104 in a technical installation 120 from a plurality of data sources.

At step 704, the method 700 may include determining, by the processor 202, multidimensional contextual parameters associated with the one or more assets 104 based on the obtained input dataset. The multidimensional contextual parameters comprise, but not limited to, operational parameters, material parameters, environmental parameters, and legal and compliance parameters.

At step 706, the method 700 may include generating, by the processor 202, a semantic graph of the input dataset based on the determined the multidimensional contextual parameters. The semantic graph comprises the multidimensional contextual parameters represented as semantically correlated entities.

At step 708, the method 700 may include determining, by the processor 202, a context of the obtained input dataset by identifying latent relationships between the determined multidimensional contextual parameters in the generated graphical representation.

At step 710, the method 700 may include extracting, by the processor 202, one or more entities from the generated graphical representation based on the determined context.

At step 712, the method 700 may include generating, by the processor 202, an LLM prompt corresponding to the obtained input dataset based on the extracted one or more entities.

At step 714, the method 700 may include determining, by the processor 202, one or more operational state, material state, environmental state and compliance state associated with the one or more assets based on the generated LLM prompt.

At step 716, the method 700 may include generating, by the processor 202, an LLM response corresponding to the generated LLM prompt by applying the determined one or more operational state, the material state, the environmental state, and the compliance state to a corresponding LLM model. The LLM response comprises a plurality of recommendations corresponding to recurring usage of the one or more assets, current performance of the one or more assets, health state of the one or more assets, and one or more actions to be performed on the one or more assets before usage of the one or more assets in a subsequent life cycle.

At step 718, the method 700 may include outputting, by the processor 202, the generated LLM response on a user interface of a user device such as the electronic device 108.

The order in which the method 700 is described is not intended to be construed as a limitation, and any number of the described method blocks may be combined or otherwise performed in any order to implement the method 700 or an alternate method. Additionally, individual blocks may be deleted from the method 700 without departing from the spirit and scope of the ongoing description. Furthermore, the method 700 may be implemented in any suitable hardware, software, firmware, or a combination thereof, that exists in the related art or that is later developed. The method 700 describes, without limitation, the implementation of the computing system 102. A person of skill in the art will understand that method 700 may be modified appropriately for implementation in various manners without departing from the scope of the ongoing description.

Embodiments of the present invention discloses methods and systems for asset lifecycle management for recurring usage of assets enabling circular economy. The system integrates heterogeneous data sources, contextualising component, and material information, ensuring regulatory compliance, and optimising the supply chain dynamics associated with second-life components. By addressing these requirements, industries may drive more effective circular economy strategies while improving sustainability outcomes and operational efficiency. At the core of the circularity-driven workflow lies the need to effectively assess and manage components based on various critical aspects. These aspects include, (a) operational parameters, which determine whether a component retains sufficient structural, electrical, or thermal integrity to continue performing its designated function; (b) material properties, including the composition and suitability of materials for recovery, recycling, or refurbishment; and (c) compliance with environmental, regulatory, or legal requirements to facilitate the reintegration of components into operational systems either within the same industry and geographical region or across different industries and locations. Hence, the system facilitates the recovery, recycling, and refurbishment of these components and materials to extend their usability and minimise waste, thereby achieving circularity within industrial workflows.

The proposed system integrates a knowledge graph with a large language model (LLM), providing technical and operational advantages in managing the circularity of components and associated materials. The proposed system consolidates diverse information sources including, but not limited to, bill of materials (BoM), operational behaviour, supply chain data, and compliance requirements, into a unified knowledge graph. By capturing and organising this information, the system enables a comprehensive contextual understanding of each component. This ensures that recommendations are derived from an in-depth analysis of the lifecycle of the component rather than isolated data points, thereby improving the accuracy and relevance of the generated outputs. By maintaining detailed relationships between engineering properties, geographic factors, supplier-specific details, and regulatory frameworks, the system delivers precise recommendations for handling, reusing, or recycling components and associated materials. This multi-faceted data integration ensures that decisions consider all relevant parameters, including technical performance and legal compliance, thus minimising the risk of errors and non-conformity.

The system provides dynamic and adaptive prompt generation. Unlike static template-based methods, which are limited by predefined parameters, the proposed system construct prompts in real-time by extracting pertinent information from the knowledge graph. This allows the LLM to receive highly contextualised prompts that reflect the unique characteristics of each component and associated operational environment. Consequently, the system generates more accurate and situation-specific recommendations, enhancing the overall efficiency and utility of the circularity management process.

Further, the system not only identifies the required steps for reuse, recycling, or material recovery, however, also generates detailed testability guidelines to assess component viability for second-life applications. This reduces the need for manual intervention while accelerating the planning and execution of circularity actions. Furthermore, the system evaluates the impact of these actions on the future performance and lifespan of the component, providing users with a comprehensive view of potential outcomes. Also, the system enables robust regulatory compliance in industries governed by stringent legal standards. By incorporating industry-specific and geographic regulations, the solution ensures that any recommended actions align with applicable compliance frameworks. This capability is crucial when evaluating materials for reuse in different environments, as it mitigates the risk of legal violations and ensures adherence to environmental and safety regulations. The modular design of the knowledge graph allows for the seamless incorporation of new data sources and supports expansion across different industries and material types. This flexibility ensures that the system remains adaptable to evolving requirements without extensive reconfiguration, in turn suitable for a wide range of industrial applications.

Furthermore, the system provides traceability and provenance tracking, by maintaining a detailed record of component origins, manufacturing processes, and operational history, in turn ensuring transparency throughout the lifecycle of the component. This capability is essential for evaluating the suitability of materials for second-life applications, as it allows stakeholders to assess the previous environmental exposure, mechanical stress, and other critical factors of the components. Further, the users may dynamically access and analyse the underlying knowledge of any component, reducing the time required to identify suitable circularity actions. This accelerated retrieval process supports faster decision-making and enhances operational responsiveness in dynamic industrial settings.

Additionally, the system generates customised recommendations tailored to diverse operational scenarios. Whether the objective is to reuse a component in a different industry, recycle materials, or ensure compliance with legal standards, the contextual analysis in the system enables providing scenario-specific guidance. This adaptability allows the system to address a variety of use cases while maintaining a high level of accuracy and relevance. Finally, the system incorporates a mechanism for continuous learning and improvement. As new operational data and regulatory updates become available, the knowledge graph can be updated accordingly. This ensures that the system remains current and continues to provide accurate recommendations over time. By adapting to emerging challenges in material circularity and sustainability, the solution remains effective in managing complex and evolving industrial environments.

Therefore, the proposed invention provides a significant advancement over conventional approaches through unique combination of LLM and semantic reasoning, real-time information augmentation, prompt-driven customization, and multi-dimensional data integration. This helps in assessing and ensuring the fitness of components for second-life applications, while simultaneously addressing legal, environmental, and operational imperatives. This approach reduces manual workload, enhances accuracy, and offers a scalable framework for managing circular economy processes across diverse industrial settings.

The present invention can take a form of a computer program product comprising program modules accessible from computer-usable or computer-readable medium storing program code for use by or in connection with one or more computers, processors, or instruction execution system. For the purpose of this description, a computer-usable or computer-readable medium can be any apparatus that can contain, store, communicate, propagate, or transport the program for use by or in connection with the instruction execution system, apparatus, or device. The medium can be electronic, magnetic, optical, electromagnetic, infrared, or semiconductor system (or apparatus or device) or a propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology can be centralised or distributed (or a combination thereof) as known to those skilled in the art.

While the present invention has been described in detail with reference to certain embodiments, it should be appreciated that the present invention is not limited to those embodiments. In view of the present disclosure, many modifications and variations would be present themselves, to those skilled in the art without departing from the scope of the various embodiments of the present invention, as described herein. The scope of the present invention is, therefore, indicated by the following claims rather than by the foregoing description. All changes, modifications, and variations coming within the meaning and range of equivalency of the claims are to be considered within their scope. All advantageous embodiments claimed in method claims may also be apply to system/apparatus claims.

### Reference numerals:

- 100: Network Architecture
- 102: Computing system
- 104: Assets
- 106: communication network
- 108: Electronic devices
- 110: Database
- 112: Hardware Processor(s)
- 114: Memory
- 116: Plurality of modules
- 118: Computing/Computer-simulated environment
- 120: Technical installation
- 202: Processor(s)
- 204: Memory
- 206: Communication interface
- 208: Network interface
- 210: Input/output unit
- 212: Bus
- 214: Asset lifecycle management module
- 302: Data receiving module
- 304: Parameter determining module
- 306: Semantic graph generating module
- 308: Context determining module
- 310: Entity extracting module
- 312: Prompt generating module
- 314: State determining module
- 316: Response generating module
- 318: Data outputting module
- 602: Bearing
- 604: Ball
- 606: Steel
- 608: Ring
- 610: Reuse
- 612: Recover
- 614: Operation-1
- 616: Operation-2
- 618: Structural
- 620: Thermal
- 622: Motor
- 624: Pump
- 626: Process industry
- 628: Motor
- 630: Conveyer belt
- 632: Mining industry
- 634: Cable
- 636: Copper
- 638: Electrical
- 640: Recover
- 642: Fastener
- 644: Structural
- 646: Plastic
- 648: Recycle
- 650: Cap
- 652: Consumer goods
- 654: Geography

## Claims

1. A method for asset lifecycle management for recurring usage of assets (104) enabling a circular economy, the method comprising:
obtaining, by a processor (112), an input dataset associated with one or more assets (104) in a technical installation (120) from a plurality of data sources;
determining, by the processor (112), multidimensional contextual parameters associated with the one or more assets (104) based on the obtained input dataset, wherein the multidimensional contextual parameters comprise at least one of operational parameters, material parameters, environmental parameters, and legal and compliance parameters;
generating, by the processor (112), a semantic graph of the input dataset based on the determined the multidimensional contextual parameters, wherein the semantic graph comprises the multidimensional contextual parameters represented as semantically correlated entities;
determining, by the processor (112), a context of the obtained input dataset by identifying latent relationships between the determined multidimensional contextual parameters in the generated graphical representation;
extracting, by the processor (112), one or more entities from the generated graphical representation based on the determined context;
generating, by the processor (112), an LLM prompt corresponding to the obtained input dataset based on the extracted one or more entities;
determining, by the processor (112), one or more operational state, material state, environmental state and compliance state associated with the one or more assets (104) based on the generated LLM prompt;
generating, by the processor (112), an LLM response corresponding to the generated LLM prompt by applying the determined one or more operational state, the material state, the environmental state and the compliance state to a corresponding LLM model, and wherein the LLM response comprises a plurality of recommendations corresponding to recurring usage of the one or more assets (104), current performance of the one or more assets (104), health state of the one or more assets (104), and one or more actions to be performed on the one or more assets (104) before usage of the one or more assets (104) in a subsequent life cycle; and
outputting, by the processor (112), the generated LLM response on a user interface of a user device (108).

2. The method according to claim 1, wherein generating the semantic graph of the input dataset based on the determined the multidimensional contextual parameters comprises:
extracting, by the processor (112), the multidimensional contextual parameters associated with the one or more assets (104) from the obtained input dataset;
identifying, by the processor (112), cross-domain dependencies between the multidimensional contextual parameters using a semantic representation model; and
generating, by the processor (112), the graphical representation of the input dataset based on the identified cross-domain dependencies.

3. The method according to claim 1, wherein generating the graphical representation of the input dataset based on the determined the multidimensional contextual parameters comprises:
assigning, by the processor (112), each of the determined the multidimensional contextual parameters to one or more nodes based on a type of the multidimensional contextual parameters;
semantically correlating, by the processor (112), each of the determined multidimensional contextual parameters using an Artificial-Intelligence (AI) model;
generating, by the processor (112), one or more relationships between the assigned one or more nodes based on the correlation; and
generating, by the processor (112), a knowledge graph model of the input dataset based on the assigned one or more nodes and the generated one or more relationships.

4. The method according to claim 1, wherein extracting one or more entities from the generated graphical representation based on the determined context comprises:
mapping, by the processor (112), the determined context with the semantically correlated entities in the generated graphical representation;
determining, by the processor (112), at least one cluster of entities relevant to the determined context based on the mapping;
determining, by the processor (112), one or more relationships between the cluster of entities relevant to the determined context; and
generating, by the processor (112), a sub-graph comprising the determined at least one cluster of entities connected using the determined one or more relationships.

5. The method according to claim 1, wherein generating the LLM prompt corresponding to the obtained input dataset based on the extracted one or more entities comprises:
determining, by the processor (112), user requirements and user preferences corresponding to the one or more assets (104);
determining, by the processor (112), an operational history, an operational behavior, a supply chain information, compliance records, a geographic information, and a maintenance history associated with the one or more assets (104);
correlating, by the processor (112), the determined user requirements and the user preferences with the determined operational history, the operational behavior, the supply chain information, the compliance records, and the maintenance history;
generating, by the processor (112), one or more questionnaires for predicting a performance of the one or more assets (104) based on the correlation; and
generating, by the processor (112), the LLM prompt corresponding to the obtained input dataset based on the generated one or more questionnaires.

6. The method according to claim 1, further comprising:
validating, by the processor (112), the generated LLM response based on the determined user requirements, the user preferences, the determined operational history, the operational behavior, the supply chain information, the compliance records, and the maintenance history;
generating, by the processor (112), a performance score for the validated LLM response based on results of validation, wherein the performance score indicates a performance level of the one or more assets (104) during the subsequent lifecycle; and
predicting, by the processor (112), a performance of the one or more assets (104) in the subsequent lifecycle based on the generated performance score.

7. The method according to claim 6, wherein validating the generated LLM response based on the determined user requirements, the user preferences, the determined operational history, the operational behavior, the supply chain information, the compliance records, and the maintenance history comprises:
simulating, by the processor (112), the one or more assets (104) in the subsequent lifecycle within a virtual environment based on the determined user requirements, the user preferences, the determined operational history, the operational behavior, the supply chain information, the compliance records, and the maintenance history; and
determining, by the processor (112), a desired health state of the one or more assets (104), and the one or more actions to be performed on the one or more assets (104) before usage of the one or more assets (104) in the subsequent life cycle based on results of simulation.

8. The method according to claim 7, wherein simulating the one or more assets (104) in the subsequent lifecycle comprises:
predicting, by the processor (112), one or more subsequent life cycle scenarios for the one or more assets (104) based on the generated LLM response, wherein the one or more subsequent life cycle scenarios comprises one or more operational and geographic conditions for the one or more assets (104);
generating, by the processor (112), one or more simulation models corresponding to the predicted one or more subsequent life cycle scenarios; and
simulating, by the processor (112), the one or more assets (104) in the subsequent lifecycle based on the generated one or more simulation models.

9. The method according to claim 1, wherein generating the LLM response corresponding to the generated LLM prompt comprises:
determining, by the processor (112), a type of the one or more assets (104) to be used in the subsequent life cycle;
determining, by the processor (112), a LLM model corresponding to the determined type of the one or more assets (104);
validating, by the processor (112), whether the determined one or more operational state, the material state, the environmental state and the compliance state is applicable to the determined type of the one or more assets (104) by applying the determined one or more operational state, the material state, the environmental state and the compliance state to the determined LLM model;
generating, by the processor (112), the plurality of recommendations corresponding to the current performance of the one or more assets (104), the health state of the one or more assets (104) based on results of validation;
generating, by the processor (112), one or more actions to be performed on the one or more assets (104) before usage of the one or more assets (104) in the subsequent life cycle based on the generated plurality of recommendations; and
generating, by the processor (112), the LLM response corresponding to the generated LLM prompt based on the generated plurality of recommendations and the generated one or more actions to be performed on the one or more assets (104) before usage of the one or more assets (104) in the subsequent life cycle.

10. The method according to claim 9, wherein generating the one or more actions to be performed on the one or more assets (104) before usage of the one or more assets (104) in the subsequent life cycle based on the generated plurality of recommendations comprises:
determining, by the processor (112), a stage of the subsequent life cycle within which the one or more assets (104) are to be used;
determining, by the processor (112), a set of operational tests to be executed for the one or more assets (104) before usage of the one or more assets (104) in the subsequent life cycle based on the determined stage; and
generating, by the processor (112), one or more reasons for executing the determined set of operational tests using explainable AI models.

11. The method according to claim 1, further comprising:
obtaining, by the processor (112), user feedback corresponding to the generated LLM response at a real-time, wherein the user feedback indicates one or more errors associated with the generated LLM response;
tuning, by the processor (112), the generated LLM prompt based on the obtained user feedback, wherein the tuned LLM prompt comprises updated set of questionnaires based on the user feedback; and
updating, by the processor (112), the LLM response based on the tuned LLM prompt.

12. The method according to claim 1, further comprising:
generating, by the processor (112), one or more Artificial-Intelligence (AI) driven insights corresponding to a behavior and a performance of the one or more assets (104) based on the generated LLM response, wherein the one or more AI-driven insights comprises one or more predictive alerts corresponding to potential degradation risks of the one or more assets (104), potential gaps and abnormalities in the behavior and the performance of the one or more assets (104), a reuse feedback, a recovery feedback, and a recycling feedback for the one or more assets (104).

13. A computing system (102) comprising:
one or more processor(s) (112); and
a memory (114) coupled to the one or more processor (s) (112), wherein the memory (114) comprises an asset lifecycle management module (214) stored in the form of machine-readable instructions executable by the one or more processor(s) (112), wherein the asset lifecycle management module (214) is capable of performing a method according to any of the claims 1-12.

14. A computing environment (118) comprising:
one or more user devices (108);
one or more technical installation (120) comprising one or more assets (104); and
a computing system (102) communicatively coupled to the one or more technical installations (120) and the one or more user devices (108) via a network (106), wherein the computing system (102) comprises an asset lifecycle management module (214) capable of performing a method according to any of the claims 1-12.

15. A computer program product comprising machine-readable instructions stored therein that, when executed by one or more processor(s) (112), cause the one or more processor(s) (112) to perform a method according to any of the claims 1-12.
